# EUROPEAN PATENT APPLICATION

(11) **EP 4 811 299 A1**
(43) Date of publication of application: **23.09.2026**
(21) Application number: 25785500.7
(22) Date of filing: 07.03.2025
(51) Int. Cl.: G06V 10/764, G06V 10/774, G06V 10/40

(54) **IMAGE RECOGNITION METHOD AND APPARATUS, AND STORAGE MEDIUM AND ELECTRONIC DEVICE**

(30) Priority: 08.04.2024 CN 202410413600
(71) Applicant: Tencent Technology (Shenzhen) Company Limited, Shenzhen, Guangdong 518057 (CN)
(72) Inventor: CHEN, Sichen, Shenzhen, Guangdong 518057 (CN); ZHANG, Yingyi, Shenzhen, Guangdong 518057 (CN); HUANG, Siming, Shenzhen, Guangdong 518057 (CN); ZHANG, Ruixin, Shenzhen, Guangdong 518057 (CN); DING, Shouhong, Shenzhen, Guangdong 518057 (CN)
(74) Representative: Nederlandsch Octrooibureau
(86) International application number: PCT/CN2025/081171
(87) International publication number: WO 2025/214020

(57) **Abstract**

Disclosed in the present application are an image recognition method and apparatus, and a storage medium and an electronic device. The method comprises: extracting image features from an image to be recognized; performing feature processing on the image features and initialized reference key point features by means of a feature processing network, so as to obtain final key point features, wherein the feature processing network is obtained by means of performing N cycles of feature processing on each sample image on the basis of an initial feature processing network, i.e., in an ith feature processing network for executing an ith cycle of feature processing, executing feature processing on an (i-1)th sample feature pair obtained by means of an (i-1)th cycle of feature processing, so as to obtain an ith sample feature pair, and adjusting network parameters of the ith feature processing network on the basis of feature differences between the (i-1)th sample feature pair and the ith sample feature pair until a convergence condition is reached; and using the final key point features to determine the positions of key points of an object to be recognized in the image to be recognized. The present application solves the technical problem of low image recognition efficiency.

## Description

This application claims priority to Chinese Patent Application No. 202410413600.4, entitled "METHOD AND APPARATUS FOR IMAGE RECOGNITION, STORAGE MEDIUM, AND ELECTRONIC DEVICE" filed with the China National Intellectual Property Administration on April 8, 2024.

### FIELD OF THE TECHNOLOGY

The present disclosure relates to the field of computers, and particularly relates to image recognition techniques.

### BACKGROUND OF THE DISCLOSURE

In some computational vision tasks, an image generally needs to be recognized to determine positions of key points on a to-be-recognized object in the image, and then, the positions of the key points in the to-be-recognized object are further analyzed to complete the vision tasks based on a result of the analysis.

For recognition and positioning of the key points in the image, a manner usually used in current related art is extracting image features by using a deep convolutional network feature extractor manually designed in advance and then recognizing the key points of an object in the image by using the image features.

However, in the manner provided in the related art, a large number of parameters are involved in a deep convolutional network, and the calculation complexity is high, thus a large amount of time is generally needed for training. That is, a process of performing image recognition by using the deep convolutional network may consume a large amount of time and thus may result in a technical problem of low image recognition efficiency.

For the problem, no effective solution has been provided yet.

### SUMMARY

Embodiments of the present disclosure provide a method for image recognition and apparatus, a storage medium and an electronic device to resolve at least the technical problem of low image recognition efficiency.

According to an aspect of an embodiment of the present disclosure, a method for image recognition is provided. The method is executable by an electronic device, and the method comprises: extracting an image feature from a first image of a first object; processing, through a feature processing network, the image feature and an initial feature of a key point of the first object to obtain a final key-point feature of the first object, where the final key-point feature indicates a position of the key point in the first image, the feature processing network is obtained through training an initial feature processing network using one or more sample images, the training comprises performing, for each sample image, iterative processing on said sample image until a convergence condition is met or a quantity of iterations in the iterative process reaches a threshold number, and each iteration of the iterative processing comprises: processing a sample feature pair of an immediately previous iteration to obtain a sample feature pair of said iteration, and adjusting parameters of a version of the feature processing network of the immediately previous iteration according to a difference between the sample feature pairs of the immediately previous iteration and said iteration to obtain a version of the feature processing network of said iteration, where the sample feature pair of each iteration comprises a respective feature of the sample image and a respective feature of a sample key point of the first object in said sample image, and where for an earliest iteration of the iterative processing, the initial feature processing network serves as the version of the feature processing network of the immediately previous iteration, and an initial image feature extracted from said sample image and an initial feature of the sample key point serve as the sample feature pair of the immediately previous iteration; and determining the position of the key point in the first image using the final key-point feature.

According to an aspect of embodiments of the present disclosure, a method for preprocessing a network for image recognition is provided. The method is executable by an electronic device, and the method comprises: obtaining one or more sample images and an initial feature processing network; and training the initial feature processing network using the one or more sample images to obtain a feature processing network; where training the initial feature processing network using the one or more sample images comprises, for each sample image among the one or more sample images: extracting an initial image feature from said sample image; obtaining an initial feature of a sample key point of a first object in said sample image; and performing iterative processing on the initial image feature of the sample image and the initial feature of the sample key point, where for each integer i from 1 through a quantity of iterations in the iterative processing, the i^{th} iteration of the iterative processing comprises: processing, through an (i-1)^{th} version of the feature processing network, the (i-1)^{th} sample feature pair obtained in the (i-1)^{th} iteration to obtain the i^{th} sample feature pair, where the initial image feature and the initial feature of the sample key point serve as the zero-th sample feature pair; determining a feature distance between the (i-1)^{th} sample feature pair and the i^{th} sample feature pair according to a difference between the (i-1)^{th} sample feature pair and the i^{th} sample feature pair; calculating a weighted sum of all feature distances obtained from the first iteration through the i^{th} iteration to obtain an i^{th} feature loss; adjusting the parameters of the (i-1)^{th} version of the feature processing network to obtain an i^{th} version of the feature processing network for the (i+1)^{th} iteration, when the i^{th} feature loss does not reach the convergence condition and i is smaller than a threshold number; and terminating the iterative processing, when the i^{th} feature loss reaches the convergence threshold or i is equal to the threshold number.

According to another aspect of embodiments of the present disclosure, an apparatus for image recognition is further provided. The apparatus is arranged in an electronic device, and the apparatus comprises: an extracting unit, configured for extracting an image feature from a first image of a first object; a processing unit, configured for processing, through a feature processing network, the image feature and an initial feature of a key point of the first object to obtain a final key-point feature of the first object, where the final key-point feature indicates a position of the key point in the first image, the feature processing network is obtained through training an initial feature processing network using one or more sample images, the training comprises performing, for each sample image, iterative processing on said sample image until a convergence condition is met or a quantity of iterations in the iterative process reaches a threshold number, and each iteration of the iterative processing comprises: processing a sample feature pair of an immediately previous iteration to obtain a sample feature pair of said iteration, and adjusting parameters of a version of the feature processing network of the immediately previous iteration according to a difference between the sample feature pairs of the immediately previous iteration and said iteration to obtain a version of the feature processing network of said iteration, wherein the sample feature pair of each iteration comprises a respective feature of the sample image and a respective feature of a sample key point of the first object in said sample image, and where for an earliest iteration of the iterative processing, the initial feature processing network serves as the version of the feature processing network of the immediately previous iteration, and an initial image feature extracted from said sample image and an initial feature of the sample key point serve as the sample feature pair of the immediately previous iteration; and a determining unit, configured for determining the position of the key point in the first image using the final key-point feature.

According to another aspect of embodiments of the present disclosure, an apparatus for preprocessing a network for image recognition is provided. The apparatus is arranged in an electronic device, and the apparatus comprises: an extracting unit, configured for extracting an initial image feature from a sample image and obtaining an initial feature of a sample key point of a first object in said sample image; and a processing unit, configured for processing, through an (i-1)^{th} version of the feature processing network, the (i-1)^{th} sample feature pair obtained in the (i-1)^{th} iteration to obtain the i^{th} sample feature pair, where iterative processing is performed on the initial feature of the sample image and the initial feature of the sample key point, i is an integer ranging from 1 through a quantity of iterations in the iterative processing, iterations of the iterative processing comprises an i^{th} iteration and an (i-1)^{th} iteration immediately previous to the i^{th} iteration, and the initial image feature and the initial feature of the sample key point serve as the zero-th sample feature pair, a first determining unit, configured for determining a feature distance between the (i-1)^{th} sample feature pair and the i^{th} sample feature pair according to a difference between the (i-1)^{th} sample feature pair and the i^{th} sample feature pair; a calculating unit, configured for calculating a weighted sum of all feature distances obtained from the first iteration through the i^{th} iteration to obtain an i^{th} feature loss; an adjusting unit, configured for adjusting the parameters of the (i-1)^{th} version of the feature processing network to obtain an i^{th} version of the feature processing network for the (i+1)^{th} iteration, when the i^{th} feature loss does not reach the convergence condition and i is smaller than a threshold number; and a second determining unit, configured for terminating the iterative processing, when the i^{th} feature loss reaches the convergence threshold or i is equal to the threshold number.

According to yet another aspect of embodiments of the present disclosure, a computer-readable storage medium is further provided. The computer-readable storage medium stores a computer program. The computer program, when executed, is configured to implement the method for image recognition or the method for preprocessing a network for image recognition.

According to yet another aspect of embodiments of the present disclosure, a computer program product is provided. The computer program product includes a computer program, and the computer program is stored in a computer-readable storage medium. A processor of a computer device reads the computer program from the computer-readable storage medium, and the processor executes the computer program to cause the computer device to implement the method for image recognition or the method for preprocessing a network for image recognition as described above.

According to yet another aspect of embodiments of the present disclosure, an electronic device is further provided. The electronic device comprises a memory and a processor. The memory has a computer program stored therein, and the processor is configured to implement the method for image recognition and the method for preprocessing a network for image recognition as described above through the computer program.

Herein the image feature is extracted from the first image of the first object. The image feature and the initial feature of the key point of the first object are processed through the feature processing network to obtain the final key-point feature of the first object. The final key-point feature indicates the position of the key point in the first image. The feature processing network is obtained through training an initial feature processing network using one or more sample images. The training comprises performing, for each sample image, iterative processing on the sample image until the convergence condition is met or a quantity of iterations in the iterative process reaches the threshold number. For an integer i in the range from 1 to N, the i^{th} iteration of the iterative processing comprises following operations. The (i-1)^{th} sample feature pair of the (i-1)^{th} iteration is processed to obtain the i^{th} sample feature pair of the i^{th} iteration. The parameters of the (i-1)^{th} version of the feature processing network are adjusted according to the difference between the (i-1)^{th} and the i^{th} sample feature pairs to obtain the i^{th} version of the feature processing network. For each integer i, the i^{th} sample feature pair comprises the i^{th} feature of the sample image and the i^{th} feature of the sample key point. As a basis of the iterative processing, the initial feature processing network serves as the 0^{th} version of the feature processing network, and the initial image feature extracted from the sample image and the initial feature of the sample key point serves as the 0^{th} sample feature pair. Then, the position of the key point in the first image is determined using the final key-point feature. Here the feature processing network obtained through the iterative self-distillation training is utilized for locating the key point on the first object in the first image. The feature processing network obtained in this manner is a lightweight network, and hence the network performance can be improved through few parameters and low-complexity calculation. Hence, the time consumption of network training is reduced while ensuring the accuracy of network computation. The issue of low efficiency of image recognition in related art is addressed. High efficiency of the image recognition is achieved.

### BRIEF DESCRIPTION OF THE DRAWINGS

The accompanying drawings described herein are configured to provide a further understanding of the present disclosure and form a part of the present disclosure. Schematic embodiments of the present disclosure and descriptions thereof are configured for explaining the present disclosure, and do not constitute any inappropriate limitation to the present disclosure. In the figures:
FIG. 1 is a schematic diagram of an application environment of a method for image recognition according to an embodiment of the present disclosure.
FIG. 2 is a schematic flowchart of a method for image recognition according to an embodiment of the present disclosure.
FIG. 3 is a schematic flowchart of a method for image recognition according to another embodiment of the present disclosure.
FIG. 4 is a schematic flowchart of a method for image recognition according to another embodiment of the present disclosure.
FIG. 5 is a schematic diagram of a method for image recognition according to another embodiment of the present disclosure.
FIG. 6 is a schematic flowchart of a method for image recognition according to another embodiment of the present disclosure.
FIG. 7 is a schematic flowchart of a method for image recognition according to another embodiment of the present disclosure.
FIG. 8 is a schematic structural diagram of an apparatus for image recognition according to an embodiment of the present disclosure.
FIG. 9 is a schematic structural diagram of an apparatus for preprocessing a network for image recognition according to an embodiment of the present disclosure.
FIG. 10 is a schematic structural diagram of an electronic device according to an embodiment of the present disclosure.
FIG. 11 is a schematic structural diagram of an electronic device according to another embodiment of the present disclosure.

### DESCRIPTION OF EMBODIMENTS

In order to help those skilled in the art better understand the technical solutions of the present disclosure, the technical solutions in embodiments of the present disclosure are clearly and completely described hereafter with reference to the accompanying drawings in the embodiments of the present disclosure. Apparently, the embodiments described are merely some rather than all of the embodiments of the present disclosure. All other embodiments obtained by persons of ordinary skill in the art based on the embodiments of the present disclosure without creative efforts shall fall within the protection scope of the present disclosure.

In the specification, claims, and accompanying drawings of the present disclosure, the terms "first", "second", etc. are intended to distinguish similar objects, but do not necessarily indicate a specific order or sequence. Data used in such a way is interchangeable in a proper case, so that the embodiments of the present disclosure described herein may be implemented, for example, in a sequence other than the sequence illustrated or described herein. Moreover, the terms "include", "have", and any other variants thereof are intended to cover the non-exclusive inclusion. For example, a process, method, system, product, or device that includes a series of operations or units is not necessarily limited to those expressly listed operations or units but may include other operations or units not expressly listed or inherent to the process, method, product, or device.

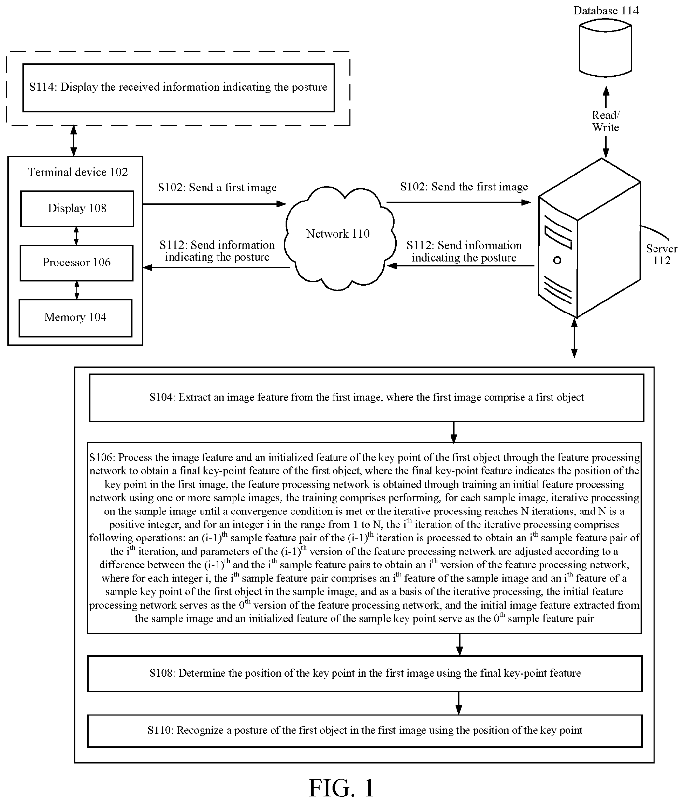

According to an aspect of embodiments of the present disclosure, a method for image recognition is provided. In embodiments of the present disclosure including the embodiments of both the claims and the specification (hereinafter referred to as "all embodiments of the present disclosure"), the image recognition may be applied to but is not limited to an environment shown in FIG. 1. As shown in FIG. 1, a terminal device 102 includes a memory 104 configured to store data generated in an operation process of the terminal device 102, a processor 106 configured to process and compute the data, and a display 108 configured to display an image to be recognized (hereinafter also called a first image). The terminal device 102 may perform data interaction with a server 112 over a network 110. The server 112 is connected to a database 114, and the database 114 is configured to store data. The terminal device 102 may run an application program configured to recognize the first image.

Further, a corresponding specific application process of the method in the environment shown in FIG. 1 is shown by the following operations.

S102: When obtaining a first image, the terminal device 102 sends the first image to the server 112 via the network 110.

S104: After receiving the first image, the server 112 extracts an image feature from the first image. The first image comprises (i.e., displays) a first object.

S106: The server 112 processes the image feature and an initial feature of the key point of the first object through the feature processing network to obtain a final key-point feature of the first object. The final key-point feature indicates the position of the key point in the first image. The feature processing network is obtained through training an initial feature processing network using one or more sample images. The training comprises performing, for each sample image, iterative processing on the sample image until a convergence condition is met or a quantity of iterations in the iterative process reaches a threshold number N. For an integer i in the range from 1 to N, the i^{th} iteration of the iterative processing comprises following operations. An (i-1)^{th} sample feature pair of the (i-1)^{th} iteration is processed to obtain an i^{th} sample feature pair of the i^{th} iteration. Parameters of the (i-1)^{th} version of the feature processing network are adjusted according to a difference between the (i-1)^{th} and the i^{th} sample feature pairs to obtain an i^{th} version of the feature processing network. For each integer i, the i^{th} sample feature pair comprises an i^{th} feature of the sample image and an i^{th} feature of a sample key point of the first object in the sample image. As a basis of the iterative processing, the initial feature processing network serves as the 0^{th} version of the feature processing network, and the initial image feature extracted from the sample image and an initial feature of the sample key point serve as the 0^{th} sample feature pair.

S108: The server 112 determines the position of the key point in the first image using the final key-point feature.

S110: The server 112 recognizes a posture of the first object in the first image using the position of the key point.

S112: The server 112 sends information indicating the posture to the terminal device 102 via the network 110.

S114: The terminal device 102 displays the received information indicating the posture.

Herein the image feature is extracted from the first image of the first object. The image feature and the initial feature of the key point of the first object are processed through the feature processing network to obtain the final key-point feature of the first object. The final key-point feature indicates the position of the key point in the first image. The feature processing network is obtained through training an initial feature processing network using one or more sample images. The training comprises performing, for each sample image, iterative processing on the sample image until the convergence condition is met or a quantity of iterations in the iterative process reaches a threshold number N. For an integer i in the range from 1 to N, the i^{th} iteration of the iterative processing comprises following operations. The (i-1)^{th} sample feature pair of the (i-1)^{th} iteration is processed to obtain the i^{th} sample feature pair of the i^{th} iteration. The parameters of the (i-1)^{th} version of the feature processing network are adjusted according to the difference between the (i-1)^{th} and the i^{th} sample feature pairs to obtain the i^{th} version of the feature processing network. For each integer i, the i^{th} sample feature pair comprises the i^{th} feature of the sample image and the i^{th} feature of the sample key point. As a basis of the iterative processing, the initial feature processing network serves as the 0^{th} version of the feature processing network, and the initial image feature extracted from the sample image and the initial feature of the sample key point serves as the 0^{th} sample feature pair. Then, the position of the key point in the first image is determined using the final key-point feature. Here the feature processing network obtained through the iterative self-distillation training is utilized for locating the key point on the first object in the first image. The feature processing network obtained in this manner is a lightweight network, and hence the network performance can be improved through few parameters and low-complexity calculation. Hence, the time consumption of network training is reduced while ensuring the accuracy of network computation. The issue of low efficiency of image recognition in related art is addressed. High efficiency of the image recognition is achieved.

In all embodiments of the present disclosure, the terminal device may be a terminal device having a target client, and may include but is not limited to at least one of : a mobile phone (such as an Android mobile phone or an iOS mobile phone), a notebook computer, a tablet computer, a palmtop computer, a mobile Internet device (MID), a PAD, a desktop computer, a smart television, etc. The target client may be a video client, an instant messaging client, a browser client, an education client, etc. The network may include but is not limited to a wired network and a wireless network. The wired network includes a local area network, a metropolitan area network, and a wide area network. The wireless network includes Bluetooth, WIFI, and other networks implementing wireless communication. The server may be a single server and may alternatively be a server cluster including a plurality of servers, or a cloud server. The above is merely examples, and the present are not limited thereto.

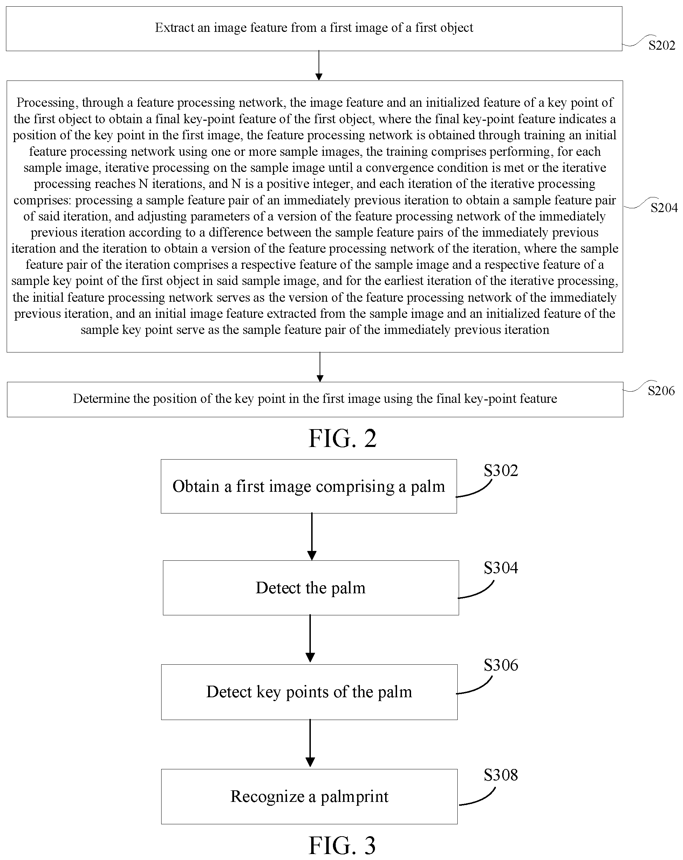

In all embodiments of the present disclosure, the method for image recognition may comprise following operations, as shown in FIG. 2

S202: Extract an image feature from a first image of a first object.

S204: Processing, through a feature processing network, the image feature and an initial feature of a key point of the first object to obtain a final key-point feature of the first object. The final key-point feature indicates a position of the key point in the first image. The feature processing network is obtained through training an initial feature processing network using one or more sample images. The training comprises performing, for each sample image, iterative processing on the sample image until a convergence condition is met or a quantity of iterations in the iterative process reaches a threshold number. Each iteration of the iterative processing comprises: processing a sample feature pair of an immediately previous iteration to obtain a sample feature pair of said iteration, and adjusting parameters of a version of the feature processing network of the immediately previous iteration according to a difference between the sample feature pairs of the immediately previous iteration and the iteration to obtain a version of the feature processing network of the iteration. The sample feature pair of the iteration comprises a respective feature of the sample image and a respective feature of a sample key point of the first object in said sample image. For the earliest iteration of the iterative processing, the initial feature processing network serves as the version of the feature processing network of the immediately previous iteration, and an initial image feature extracted from the sample image and an initial feature of the sample key point serve as the sample feature pair of the immediately previous iteration.

S206: Determine the position of the key point in the first image using the final key-point feature.

In all embodiments of the present disclosure, the method for image recognition may be applied to but is not limited to a processing scenario of a computer vision task, such as identity recognition and posture estimation. The present disclosure is not limited to these examples. Specifically, in an identity recognition scenario, the positions of the key points (for example, points in a palmprint of the first object, points in a fingerprint of the first object, or points in a pupil of the first object) of the first object displayed in the first image can be recognized by using the method for image recognition. Then, the key points are extracted from the first image by using the positions of the key points in the first object, so as to further recognize the identity of the first object by using the key points. For example, the identity of the first object is recognized through fingerprint detection, palmprint detection, pupil detection, human face detection, and the like. This is not limited herein. In a posture estimation scenario, the above method for image recognition may be used, the positions of the key points (for example, points in a skeleton of the first object) of the first object displayed in the first image may be recognized. The posture of the first object may be further determined based on these positions. The posture may be used for further action analysis (for example, helping recognize actions and postures of humans or animals through posture estimation so as to realize analysis and understanding of behaviors), posture alignment and registration (for example, helping align and register other objects or humans of different postures by using the posture, so as to realize matching and identification of the objects or humans), posture generation and reconstruction (for example, generating and reconstructing a three-dimensional model by using the posture, so as to realize three-dimensional reconstruction and modeling of the objects or the humans), etc.

Here the first object refers to an object on which keypoint(s) need to be recognized, and the first object may be but is not limited to be human, an item, an animal, or the like. The present disclosure is not limited to these examples. Further, if the first object is human, the key point in the first object may be but is not limited to be a point indicating a part of the first object, for example, a point of a skeleton of the first object, a point in a palmprint of the first object, a point in a fingerprint of the first object, or a point in a pupil of the first object. The present disclosure is not limited to these examples and depends on a scenario to which the method is applied.

The initial feature of the key point(s) serves as a basis for the iterative processing, and thus it is also called initialized/initial key-point feature. The final key-point feature of the key point(s) is obtained through optimizing the initial feature of the key point(s). The initial feature may be a vector indicating a "start position" of the key point(s) for starting the iterative processing, so that the more correct key-point feature, i.e., the final key-point features can be obtained with fast convergence.

The initial feature of the key point(s) may be obtained through an initialization process, and a manner of the initialization is not limited here. For example, it may be random initialization, may be initialization based on prior knowledge, may be initialization based on a statistical model, may be initialization based on image features, etc.

The image feature refers to a feature (vector) reflecting visual characteristics of the first image. For example, it may indicate an edge, a contour, a texture, etc. The image features may reflect the shape and structure of the first object. By extracting and using these features, the key points of the first object can be located more accurately. After the initial feature of the key point(s) are obtained through the initialization, the initial feature of key point(s) is optimized by using the image feature to improve accuracy and robustness of the predicted results, such that the accurate final key-point feature can be obtained.

Further, the image feature may be but is not limited to a feature vector directly extracted from the first image, or it may be an image feature vector obtained through converting a feature vector directly extracted from the first image. The present disclosure is not limited to these examples. In all embodiments of the present disclosure, the operation of extracting feature(s) from the first image and then converting the feature(s) to obtain the image feature may include, but is not limited to the following operations.

S1: The first image is subject to processing of a region recognition network, such that a candidate region in which the first object is located is determined from the first image. The region recognition network may use, but is not limited to, a common target detection neural network model, for example, a convolutional neural network (CNN), a You Only Look One (YOLO) neural network, or another neural network model having a similar function. The present disclosure is not limited to these examples.

S2: The first image is cropped to reserve the candidate region in which the first object is located in the first image.

S3: The feature corresponding to content displayed in the candidate region is extracted by using a feature extraction network. The feature extraction network may be but is not limited to be a network comprising a common deep learning model, for example, a generative adversarial network (GAN), a pre-trained model, an autoencoder, a classic backbone network, or another neural network model having a similar function. The present disclosure is not limited to these examples.

S4: A dimension of the feature is adjusted to a preset dimension to obtain an adjusted feature. The dimension of the feature may be adjusted by using a linear neural network model or another neural network model having a similar function. The present disclosure is not limited to these examples.

S5: The adjusted image feature is subject to position encoding to obtain image visual token(s). The image visual token(s) serve as the image feature. The position encoding may be performed by using a position embedding model or another neural network model having a similar function. The present disclosure is not limited to these examples. In all embodiments of the present disclosure, after the image feature is extracted from the first image, the method may further include inputting the image feature and the initial feature of the key point into the feature processing network. Herein the feature processing network may be but not limited to be a network comprising a self-attention neural network model. The self-attention neural network model may include, but not limited to, a plurality of self-attention sub-neural networks. Each of the plurality of self-attention sub-neural networks may further include a plurality of attention neural network layers.

In all embodiments of the present disclosure, the feature processing network may comprises P sub-networks, P is a positive integer, and processing, through the feature processing network, the image feature and the initial feature of the key point of the first object to obtain the final key-point feature of the first object may comprise following operations for each integer j from 2 through P. A (j-1)^{th} image feature and a (j-1)^{th} key-point feature, which are outputted from a (j-1)^{th} sub-network in the feature processing network, are inputted into a j^{th} sub-network in the feature processing network. The (j-1)^{th} image feature and the (j-1)^{th} key-point feature are processed through the j^{th} sub-network to obtain a j^{th} image feature and a j^{th} key-point feature. When j is equal to P, the j^{th} key-point feature is determined to serve as the final key-point feature. When j is less than P, the j^{th} image feature and the j^{th} key-point feature are outputted from the j^{th} sub-network to a (j+1)^{th} sub-network in the feature processing network.

In all embodiments of the present disclosure, before extracting the image feature from a first image, the method may further comprise training an initial feature processing network using sample images. For each sample image, the training comprises performing iterative processing on the sample image until the convergence condition is reached or a quantity of iterations in the iterative process reaches a threshold number N (i.e., there have been N iterations). The i^{th} iteration of the iterative processing comprises: processing, through the (i-1)^{th} version of the feature processing network, the (i-1)^{th} sample feature pair obtained in the (i-1)^{th} iteration to obtain the i^{th} sample feature pair, and adjusting parameters of the (i-1)^{th} version of the feature processing network according to the difference between the (i-1)^{th} and the i^{th} sample feature pairs to obtain the i^{th} version of the feature processing network. N is a positive integer, and i is in a range from 1 to N.

In all embodiments of the present disclosure, determining the position of the key point in the first image using the final key-point feature may include but is not limited to following operations. The final key-point feature is mapped to a target position in the first image through a fully-connected layer connected to the feature processing network, and the target position is the position of the key point in the first image. The fully-connected layer may be trained independently or trained together with the feature processing network.

Hereinafter it is assumed that the method for image recognition is applied to a posture detection scenario. In all embodiments of the present disclosure, the method may comprise but is not limited to the following operations.

S1: Extract the image feature from the first image and obtain the initial feature of the key point(s) through initialization.

S2: Input the image feature and the initial feature of the key point(s) into the feature processing network.

S3: Process the image feature and the initial feature of the key point(s) of the first object through the feature processing network to obtain the final key-point feature of the first object. The final key-point feature indicates the position(s) of the key point(s) in the first image. The feature processing network is obtained through training the initial feature processing network using one or more sample images. The training comprises performing, for each sample image, iterative processing on the sample image until the convergence condition is met or a quantity of iterations in the iterative process reaches a threshold number N. For the integer i in the range from 1 to N, the i^{th} iteration of the iterative processing comprises following operations. The (i-1)^{th} sample feature pair of the (i-1)^{th} iteration is processed to obtain the i^{th} sample feature pair of the i^{th} iteration. The parameters of the (i-1)^{th} version of the feature processing network are adjusted according to the difference between the (i-1)^{th} and the i^{th} sample feature pairs to obtain the i^{th} version of the feature processing network. For each integer i, the i^{th} sample feature pair comprises the i^{th} feature of the sample image and the i^{th} feature of the key point(s). As a basis of the iterative processing, the initial feature processing network serves as the 0^{th} version of the feature processing network, and the initial image feature extracted from the sample image and the initial feature of the sample key point(s) of the first object in the sample image serve as the 0^{th} sample feature pair.

S4: Map the final key-point feature through the fully-connected layer, which is connected to the feature processing network, to the position(s) of the key point(s) in the first image.

S5: Determine a posture of the first object using the position(s) of the key point(s).

In another embodiment, it is assumed that the method for image recognition is applied to a palmprint-based identity detection scenario. In all embodiments of the present disclosure, the method may comprise but is not limited to the following operations.

S302: Obtain the first image which comprises a palm of the first object.

S304: Detect the palm from the first image. Specifically, recognition is performed on the first image by using the region recognition network in a palm detecting module, so as to determine a candidate region in which the palm is located from the first image. Then, the first image is cropped to reserve the candidate region of the palm in the first image. The feature reflecting the content of the candidate region can be extracted through a feature extraction network to serve as the image feature.

S306: Detect key points of the palm from the candidate region. Specifically, the image feature and the initial feature of the key points are input into the feature processing network for processing to the feature processing network to obtain the final key-point feature that correspond to the key points of the palm. Then, the final key-point feature is mapped through the fully-connected layer connected to the feature processing network to obtain the positions of the key points in the first image.

S308: Recognize a palmprint. Specifically, an image of the palm is extracted according to the positions of the key points of the palm, and then the palm image is compared with palm images in a database to determine an identity of the first object.

Herein the image feature is extracted from the first image of the first object. The image feature and the initial feature of the key point of the first object are processed through the feature processing network to obtain the final key-point feature of the first object. The final key-point feature indicates the position of the key point in the first image. The feature processing network is obtained through training an initial feature processing network using one or more sample images. The training comprises performing, for each sample image, iterative processing on the sample image until the convergence condition is met or a quantity of iterations in the iterative process reaches a threshold number N. For an integer i in the range from 1 to N, the i^{th} iteration of the iterative processing comprises following operations. The (i-1)^{th} sample feature pair of the (i-1)^{th} iteration is processed to obtain the i^{th} sample feature pair of the i^{th} iteration. The parameters of the (i-1)^{th} version of the feature processing network are adjusted according to the difference between the (i-1)^{th} and the i^{th} sample feature pairs to obtain the i^{th} version of the feature processing network. For each integer i, the i^{th} sample feature pair comprises the i^{th} feature of the sample image and the i^{th} feature of the sample key point. As a basis of the iterative processing, the initial feature processing network serves as the 0^{th} version of the feature processing network, and the initial image feature extracted from the sample image and the initial feature of the sample key point serves as the 0^{th} sample feature pair. Then, the position of the key point in the first image is determined using the final key-point feature. Here the feature processing network obtained through the iterative self-distillation training is utilized for locating the key point on the first object in the first image. The feature processing network obtained in this manner is a lightweight network, and hence the network performance can be improved through few parameters and low-complexity calculation. Hence, the time consumption of network training is reduced while ensuring the accuracy of network computation. The issue of low efficiency of image recognition in related art is addressed. High efficiency of the image recognition is achieved.

In all embodiments of the present disclosure, the feature processing network may comprise P sub-networks, P is a positive integer. Processing, through the feature processing network, the image feature and the initial feature of the key point of the first object to obtain the final key-point feature of the first object may comprise following operations.

The (j-1)^{th} image feature and the (j-1)^{th} key-point feature, which are outputted from the (j-1)^{th} sub-network in the feature processing network, are inputted into the j^{th} sub-network in the feature processing network, where j is an integer in a range from 2 to P.

The (j-1)^{th} image feature and the (j-1)^{th} key-point feature are processed through the j^{th} sub-network to obtain a j^{th} image feature and a j^{th} key-point feature.

When j is equal to P, the j^{th} key-point feature is determined to serve as the final key-point feature.

When j is less than P, the j^{th} image feature and the j^{th} key-point feature are outputted from the j^{th} sub-network to the (j+1)^{th} sub-network in the feature processing network.

In all embodiments of the present disclosure, the feature processing network may be but is not limited to a network comprising a self-attention neural network model. The self-attention neural network model may include, but is not limited to, a plurality of self-attention sub-neural networks. Each self-attention sub-neural network may comprise a plurality of attention neural network layers.

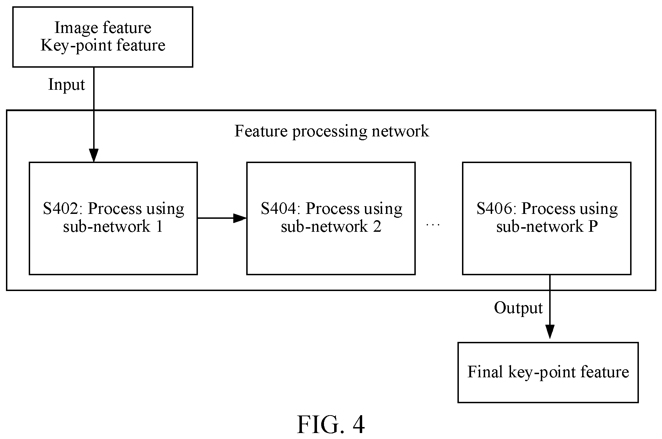

Hereinafter it is taken as an example that the feature processing network including P sub-networks, which are sub-network 1, sub-network 2, ..., and sub-network P. In this example, the method may comprise but is not limited to the following operations as shown in FIG. 4:

In S402, the image feature and the initial key-point feature are inputted into sub-network 1 in the feature processing network. Then, the image feature and the initial key-point feature are processed through sub-network 1 to obtain the 1^{st} image feature and the 1^{st} initial key-point feature. Sub-network 1 is not the last sub-network, and hence the process proceeds to S404. In S404, the 1^{st} image feature and the 1^{st} initial key-point feature are inputted into sub-network 2 in the feature processing network. The 1^{st} image feature and the 1^{st} initial key-point feature are processed through sub-network 2 to obtain the 2^{nd} image feature and the 2^{nd} initial key-point feature. Sub-network 2 is not the last sub-network, and hence the process continues such that the 2^{nd} image feature and the 2^{nd} initial key-point feature are inputted into the next sub-network in the feature processing network for feature processing, and so forth, until the (P-1)^{th} image feature and the (P-1)^{th} key-point feature are obtained. Then, the process proceeds to S406. In S406, the (P-1)^{th} image feature and the (P-1)^{th} key-point feature are inputted into sub-network P in the feature processing network. The (P-1)^{th} image feature and the (P-1)^{th} key-point feature are processed through sub-network P to obtain the P^{th} image feature and the P^{th} key-point feature. The sub-network P is the last sub-network, and hence the P^{th} key-point feature is determined as the final key-point feature.

The above example is only an example in this embodiment, and the above operations may also be implemented in another manner. The present disclosure is not limited to this example.

Here feature processing is performed on the image feature by using the plurality of sub-networks included in the feature processing network obtained through iterative self-distillation training to obtain the final key-point feature. This makes the obtained final key-point feature more reliable. Therefore, the technical effect of improving image recognition accuracy is achieved.

In all embodiments of the present disclosure, processing the (j-1)^{th} image feature and the (j-1)^{th} key-point feature through the j^{th} sub-network to obtain the j^{th} image feature and the j^{th} key-point feature may comprise following operations.

Linear transformation is performed on the (j-1)^{th} image feature through the 1^{st} layer of the j^{th} sub-network to obtain the 1^{st} image sub-feature. The linear transformation is performed on the (j-1)^{th} key-point feature through the 1^{st} layer of the j^{th} sub-network to obtain the 1^{st} key-point sub-feature.

The (h-1)^{th} image sub-feature and the (h-1)^{th} key-point sub-feature, which are outputted from an (h-1)^{th} layer of the j^{th} sub-network, are inputted into the h^{th} layer in the j^{th} sub-network, where h is an integer greater than 2.

The linear transformation is performed on the (h-1)^{th} image sub-feature through the h^{th} layer to obtain a first result, wherein the first result serves as an h^{th} image sub-feature. The linear transformation is performed on the (h-1)^{th} key-point sub-feature through the h^{th} layer to obtain a second result. The h^{th} key-point sub-feature is obtained through the h^{th} layer according to the first result and the second result.

When the h^{th} layer is the last layer in the j^{th} sub-network, the h^{th} image sub-feature and the h^{th} key-point sub-feature are determined to serve as the j^{th} image feature and the j^{th} key-point feature, respectively.

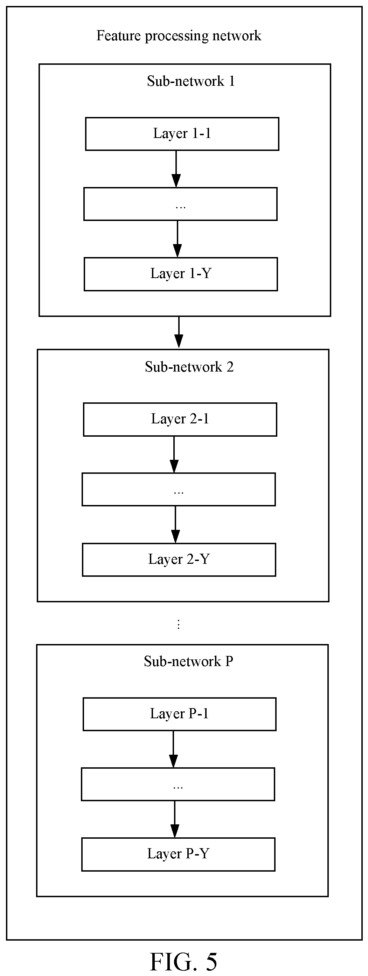

Hereinafter it is taken as an example that the above-mentioned feature processing network is as shown in FIG. 5. The feature processing network includes P sub-networks which are respectively sub-network 1, sub-network 2, ..., and sub-network P. Each of the sub-networks includes Y layers. The sub-network 1 includes layer 1-1, layer 1-2, ..., and layer 1-Y. The sub-network 2 includes layer 2-1, layer 2-2 ..., and layer 2-Y. The sub-network P includes layer P-1, layer P-2, ..., and layer P-Y. In this example, the above method may comprise the following operations.

S502. The image features and the initial key-point feature are inputted into layer 1-1 in sub-network 1 and are processed by layer 1-1 to obtain image feature 1-1 and key-point feature 1-1.

The operation of processing the image feature and the initial key-point feature by using the layer 1-1 to obtain image feature 1-1 and key-point feature 1-1 may include but is not limited to following operations. Linear transformation is performed on the image feature to obtain a query vector, a key vector, and a value vector, of the image features. The linear transformation is performed on the initial key-point feature to obtain a query vector, a key vector, and a value vector, of the initial key-point feature. Image feature 1-1 is determined according to the query vector, the key vector, and the value vector of the image features. Key-point feature 1-1 is determined using the query vector, the key vector, and the value vector, of the initial key-point feature.

For example, determining image feature 1-1 according to the query vector, the key vector, and the value vector of the image features and determining key-point feature 1-1 according to the query vector, the key vector, and the value vector of the initial key-point feature may adopt but is not limited to the following equations. ${s}_{a 1} = Attention \left({Q}_{s}, {K}_{s}, {V}_{s}\right) = softmax \left(\frac{{Q}_{s} {{K}_{s}}^{T}}{\sqrt{{d}_{ks}}}\right) {V}_{s}$ ${g}_{a 1} = Attention \left({Q}_{g}, {K}_{g}, {V}_{g}\right) = softmax \left(\frac{{Q}_{g} {{K}_{g}}^{T}}{\sqrt{{d}_{kg}}}\right) {V}_{s}$

In the equation, *s*_{*a*1} represents image feature 1-1, *g*_{*a*1} represents initial key-point feature 1-1, *Qₛ, Kₛ, Vₛ* represent the query vector, the key vector, and the value vector, respectively, of the image feature, *Q_{g}, K_{g}, V_{g}* represent the query vector, the key vector, and the value vector, respectively, of the initial key-point feature, *dₖₛ* represents a dimension of *Kₛ,* and *d_{kg}* represents a dimension of *K_{g}.*

S504. Image feature 1-1 and key-point feature 1-1 are inputted into layer 1-2 in sub-network 1 and are processed by layer 1-2 to obtain image feature 1-2 and key-point feature 1-2.

The operation of processing image feature 1-1 and key-point feature 1-1 through layer 1-2 to obtain image feature 1-2 and key-point feature 1-2 may include but is not limited to following operations. The linear transformation is performed on image feature 1-1 to obtain image feature 1-2. The linear transformation is performed on initial key-point feature 1-1 to obtain a query vector and a key vector of initial key-point feature 1-1. Initial key-point feature 1-2 is determined according to image feature 1-2 and the query vector and the key vector of initial key-point feature 1-1.

For example, determining initial key-point feature 1-2 according to image feature 1-2 and the query vector and the key vector of key-point feature 1-1 may adopt but is not limited to the following equation. ${g}_{a 2} = Attention \left({Q}_{g 1}, {K}_{g 1}, {s}_{a 2}\right) = softmax \left(\frac{{Q}_{g 1} {{K}_{g 1}}^{T}}{\sqrt{{d}_{kg 1}}}\right) {s}_{a 2}$

In the equation, *g*_{*a*2} represents key-point feature 1-2, *Q*_{*g*1} and *K*_{*g*1} represent the query vector and the key vector, respectively, of initial key-point feature 1-1, *s*_{*a*2} represents image feature 1-2 that is obtained through the linear transformation on the image feature 1-1, and *d*_{*kg*1} represents a dimension of *K*_{*g*1}*.*

The subsequent processing can be deduced by analogy, until image feature 1-Y and key-point feature 1-Y outputted from layer 1-Y are obtained.

S506: Image feature 1-Y and key-point feature 1-Y are inputted into layer 2-1 in sub-network 2 and are processed by layer 2-1 to obtain image feature 2-1 and key-point feature 2-1. Details may refer to processing in layer 1-1 and are not described again.

S508: Image feature 2-1 and key-point feature 2-1 are inputted into layer 2-2 in sub-network 2 and are processed by layer 2-2 to obtain image feature 2-2 and initial key-point feature 2-2. Details may refer to processing in layer 1-2.

The subsequent processing can be deduced by analogy, until image feature 2-Y and l key-point feature 2-Y outputted from layer 2-Y are obtained. Further, image feature 2-Y and initial key-point feature 2-Y are inputted into the next sub-network, and so forth, until image feature P-Y and key-point feature P-Y outputted from layer P-Y are obtained.

S510: Since the layer P-Y is the last layer in the last sub-network of the feature processing network, key-point feature P-Y is determined to serve as the final key-point feature.

Here the final key-point feature of the first object is obtained by processing the image feature through the multiple layers in the multiple sub-networks. This makes the final key-point feature more reliable. Therefore, the technical effect of improving image recognition accuracy is achieved.

In all embodiments of the present disclosure, before extracting the image feature from a first image, the method may comprise training an initial feature processing network using sample image.

Training the initial feature processing network may comprise following operations.

Iterative processing is performed on the initial feature of the k^{th} sample image among M sample images and the initial feature of the key point, where M is a positive integer and k is an integer in a range from 1 to M. The i^{th} iteration of the iterative processing comprises following operations.

The (i-1)^{th} sample feature pair, which is obtained in the (i-1)^{th} iteration, is processed through the (i-1)^{th} version of the feature processing network to obtain the i^{th} sample feature pair, where the initial image feature and the initial feature of the sample key point serve as the 0^{th} sample feature pair for i = 1.

A feature distance between the (i-1)^{th} sample feature pair and the i^{th} sample feature pair is determined according to a difference between the (i-1)^{th} sample feature pair and the i^{th} sample feature pair;
A weighted sum of all feature distances obtained from the 1^{st} iteration through the i^{th} iteration is calculated to obtain an i^{th} feature loss.

The parameters of the (i-1)^{th} version of the feature processing network is adjusted to obtain the i^{th} version of the feature processing network, which is for the (i+1)^{th} iteration, when the i^{th} feature loss does not reach the convergence condition and i is smaller than the threshold number.

The iterative processing on the sample image is terminated, when the i^{th} feature loss reaches the convergence threshold or i is equal to the threshold number.

Here the threshold number N indicates the maximum number of iterations that is allowed on each sample image during the training of the feature processing network, and the training is also stopped when the convergence condition is reached for a certain sample. It is appreciated that the termination on the convergence condition is only triggered before or when the iterations reach the maximum number. For example, if there are M sample images, the iterative training on each sample image is limited to a maximum of x iterations. It is assumed that when the feature processing network is trained using the 2^{nd} sample image, the feature processing network still does not reach the convergence condition after x iterations, and the iterative training still stops, i.e., N = x. It is assumed that when the feature processing network is trained using the 3^{rd} sample image, the feature processing network reaches the convergence condition (e.g., the feature loss is smaller than or equal to a threshold) after the 2^{nd} iteration, and the iterative training stops even if the iterative training still does not reach the x iterations.

In all embodiments of the present disclosure, when the i^{th} feature loss does not reach the convergence condition and after adjusting the parameters of the (i-1)^{th} version of the feature processing network to obtain an i^{th} version of the feature processing network for the (i+1)^{th} iteration, it may be then whether i is equal to the maximum number of iterations.

In all embodiments of the present disclosure, the i^{th} iteration of the iterative processing may further include but is not limited to the following operations. When i is determined to be smaller than the maximum number of iterations, the iterative processing proceeds to the (i+1)^{th} iteration. When i is determined to be equal to the maximum number of iterations, the i^{th} iteration is determined to be the last iteration of the iterative processing.

In all embodiments of the present disclosure, when the i^{th} feature loss reaches the convergence condition and the iterative processing on the sample image terminates, the i^{th} iteration may comprise a following operation. The (i-1)^{th} version of the feature processing network is determined to serve as a converged feature processing network.

Herein a manner of extracting the initial feature from the k^{th} sample image may refer to, but is not limited to, that of extracting the image feature from the first image as described above. The present disclosure is not limited to these examples. In an embodiment, M may be but is not limited to a total number of the sample images.

In all embodiments of the present disclosure, determining the feature distance between the (i-1)^{th} sample feature pair and the i^{th} sample feature pair according to the difference between the (i-1)^{th} sample feature pair and the i^{th} sample feature pair may comprise following operations. An (i-1)^{th} image feature distance is calculated, where the (i-1)^{th} image feature distance is a distance between the (i-1)^{th} feature of the sample image in the (i-1)^{th} sample feature pair and the i^{th} feature of the sample image in the i^{th} sample feature pair. An (i-1)^{th} key-point feature distance is calculated, where the (i-1)^{th} key-point feature distance is a distance between the (i-1)^{th} feature of the sample key point in the (i-1)^{th} sample feature pair and the i^{th} feature of the sample key point in the i^{th} sample feature pair. The feature distance between the (i-1)^{th} sample feature pair and the i^{th} sample feature pair comprises the (i-1)^{th} image feature distance and the (i-1)^{th} key-point feature distance.

In all embodiments of the present disclosure, calculating the weighted sum of all feature distances obtained from the first iteration through the i^{th} iteration to obtain the i^{th} feature loss may comprise following operations. An image feature loss is calculated, where the image feature loss is a weighted sum of all image feature distances obtained from the first iteration through the i^{th} iteration. A key-point feature loss is calculated, where the key-point feature loss is a weighted sum of all key-point feature distances obtained from the first iteration through the i^{th} iteration. The i^{th} feature loss is calculated, where the i^{th} feature loss is a weighted sum of the image feature loss and the key-point feature loss.

Hereinafter illustrated is an example of the method that comprise but is not limited to the following operations.

The initial feature of the sample images is extracted from the k^{th} sample image. Then, the initial (i.e., 0^{th}) feature of the sample images and the initial (i.e., 0^{th}) feature of the sample key point are inputted into the initial feature processing network (i.e., the 0^{th} version). The 1^{st} iteration is performed on the initial feature of the sample image and the initial feature of the sample key point through the initial feature processing network to obtain the 1^{st} feature of the sample image and the 1^{st} feature of the key point.

Further, the 0^{th} image feature distance between the 1^{st} feature of the sample image and the initial feature of the sample image is obtained, and the 0^{th} key-point feature distance between the 1^{st} feature of the sample key point and the initial feature of the sample key point is obtained. Further, the 1^{st} feature loss is obtained according to the 0^{th} image feature distance and the 0^{th} key-point feature distance. Therefore, the 1^{st} feature loss determined by using only the feature distance of the 1^{st} iteration, and when it (equivalent to all the feature distances obtained from the 1^{st} iteration to the 1^{st} iteration) reaches the convergence condition (e.g., no greater than a threshold), the 1^{st} iteration is determined to be the last iteration of the iterative processing.

When the 1^{st} feature loss does not reach the convergence condition, the network parameters of the initial feature processing network are adjusted to obtain the 1^{st} version of the feature processing network. Then, the 1^{st} feature of the sample image and the 1^{st} feature of the key point are inputted into the 1^{st} version of the feature processing network and are processed by the 1^{st} feature processing network to obtain the 2^{nd} feature of the sample image and the 2^{nd} feature of the key point. Further, the 1^{st} image feature distance between the 1^{st} feature of the sample image and the 2^{nd} feature of the sample image is obtained, and the 1^{st} key-point feature distance between the 1^{st} feature of the key point and the 2^{nd} feature of the key point is obtained. Further, the weighted sum of the 0^{th} image feature distance and the 1^{st} image feature distance are calculated as obtain a first sum, and the weighted sum of the 0^{th} key-point feature distance and the 1^{st} key-point feature distance are calculated as a second sum. Further, a weighted sum of the first sum and the second sum are calculated as the 2^{nd} feature loss.

Therefore, when 2^{nd} feature loss determined using the feature distances of the 1^{st} and 2^{nd} iterations reaches the convergence condition, the 2^{nd} iteration is determined to be last iteration of the iterative processing. When the 2^{nd} feature loss does not reach the convergence condition, the network parameters of the 1^{st} version of the feature processing network are adjusted to obtain the 2^{nd} version of the feature processing network. Next, the 2^{nd} feature of the sample image and the 2^{nd} feature of the key point are inputted to the 2^{nd} version of the feature processing network. Details of the processing in the 2^{nd} version of the feature processing network refer to those of the processing in the 1^{st} version of the feature processing network. Subsequent processing and adjustment are performed similarly, until the feature processing network reaches the convergence condition (i.e., the feature loss of a certain iteration reaches the convergence condition), or until the iterative processing reaches the maximum number. Details are not repeated again.

Herein the initial feature processing network is trained based on a iterative self-distillation manner so as to obtain an available feature processing network. The accuracy of network calculation results is ensured, and at the same time, the time consumed for network training is reduced. In the iterative training of the feature processing network, new sample data is continuously generated (i.e., the feature of the sample images and the feature of the key points obtained after in each iteration may be used as new samples for the training), so that the resources consumed by the training process can be greatly reduced. Therefore, low image recognition efficiency in an image recognition means provided in the related art is addressed, and the technical effect of improving the image recognition efficiency is achieved.

In all embodiments of the present disclosure, determining a feature distance between the (i-1)^{th} sample feature pair and the i^{th} iteration according to a difference between the (i-1)^{th} sample feature pair and the i^{th} sample feature pair may comprise following operation.

A difference between the (i-1)^{th} feature of the sample image in the (i-1)^{th} sample feature pair and the i^{th} feature of the sample image in the i^{th} sample feature pair is calculated as the (i-1)^{th} image feature distance.

In all embodiments of the present disclosure, this operation may adopt but is not limited to the following equation. ${L}_{v i - 1} = MSE \left({VT}_{i - 1}, {VT}_{i}\right)$

represents the (i-1)^{th} image feature distance, *VT*_{*i*-1} represents the (i-1)^{th} feature of the sample image, and *VTᵢ* represents the i^{th} feature of the sample image.

A difference between the (i-1)^{th} feature of the sample key point in the (i-1)^{th} sample feature pair and the i^{th} feature of the sample key point in the i^{th} sample feature pair is calculated as the (i-1)^{th} key-point feature distance.

In all embodiments of the present disclosure, this operation may adopt but is not limited to the following equation. ${L}_{k i - 1} = MSE \left({KT}_{i - 1}, {KT}_{i}\right)$

represents the (i-1)^{th} key-point feature distance, *KT*_{*i*-1} represents the (i-1)^{th} feature of the sample key point, and *KTᵢ* represents the i^{th} feature of the sample key point.

The above are only examples of the operations. The operations may also be implemented in another manner. The present disclosure is not limited to these examples.

Here the difference between features of the sample image obtained in every two adjacent iterations and the difference between features of the sample key point obtained in every two adjacent feature processing networks are obtained, and the feature loss for training the feature processing network is determined according to the difference between the features of the sample images and the difference between the features of the sample key points. An objective of self-distillation cyclic training of the feature processing network is achieved, so that the time consumed by the network training is reduced. Low image recognition efficiency in an image recognition means provided in the related art is further addressed, and the technical effect of improving the image recognition efficiency is achieved.

In all embodiments of the present disclosure, calculating the weighted sum of all feature distances obtained from the 1^{st} iteration through the i^{th} iteration to obtain the i^{th} feature loss may comprise following operations.

A weighted sum of all image feature distances obtained from the 1^{st} iteration through the i^{th} iteration is calculated as an image feature loss. A weighted sum of all key-point feature distances obtained from the 1^{st} iteration through the i^{th} iteration is calculated as a key-point feature loss.

A weighted sum of the image feature loss and the key-point feature loss is calculated as the i^{th} feature loss.

In all embodiments of the present disclosure, the above operations may adopt but are not limited to the following equations. ${L}_{kt} = {\sum }_{x = 1}^{i} MSE \left({KT}_{x - 1}, {KT}_{x}\right)$ ${L}_{vt} = {\sum }_{x = 1}^{i} MSE \left({VT}_{x - 1}, {VT}_{x}\right)$ $L = {α}_{1} {L}_{kt} + {α}_{2} {L}_{vt}$

*VT*_{*x*-1} represents the (x-1)^{th} feature of the sample image, *VTₓ* represents the x^{th} feature of the sample image, *KT*_{*x*-1} represents the (x-1)^{th} feature of the key point, *KTₓ* represents the x^{th} feature of the key point, 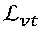 represents the feature of the image feature loss, 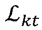 represents the key-point feature loss, 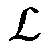 represents the i^{th} feature loss, *α*₂ and *α*₁ represent weights of the image feature loss and the key-point feature loss, respectively.

The above is merely an example of the operations. In this embodiment, the operations may also be implemented in another manner. The present disclosure is not limited to this example.

Here the difference between features of the sample image obtained in every two adjacent iterations and the difference between features of the sample key point obtained in every two adjacent feature processing networks are obtained, and the feature loss for training the feature processing network is determined according to the difference between the features of the sample images and the difference between the features of the sample key points. An objective of self-distillation cyclic training of the feature processing network is achieved, so that the time consumed by the network training is reduced. Low image recognition efficiency in an image recognition means provided in the related art is further addressed, and the technical effect of improving the image recognition efficiency is achieved.

In all embodiments of the present disclosure, after processing, through the (i-1)^{th} version of the feature processing network, the (i-1)^{th} sample feature pair obtained through the (i-1)^{th} iteration to obtain the i^{th} sample feature pair, the method may further comprise following operations.

The i^{th} feature of the sample key point in the i^{th} sample feature pair are inputted into an (i-1)^{th} version of a fully-connected layer to obtain an i^{th} predicted position of the sample key point.

The i^{th} predicted position of the sample key point is compared with a ground-truth position of the sample key point in the sample image to obtain an i^{th} prediction difference of the sample key point.

An i^{th} key-point prediction loss is calculated, where the i^{th} key-point prediction loss is a weighted sum of the prediction differences of the sample key point obtained from the 1^{st} iteration through the i^{th} iteration.

An i^{th} total loss is calculated, where the i^{th} total loss is a weighted sum of the i^{th} feature loss and the i^{th} key-point prediction loss.

The parameters of the (i-1)^{th} version of the feature processing network are adjusted to obtain the i^{th} version of the feature processing network for the (i+1)^{th} iteration and adjusting parameters of the (i-1)^{th} version of the fully-connected layer to obtain an i^{th} version of the fully-connected layer for the (i+1)^{th} iteration, when the i^{th} total loss does not reach the convergence condition and i is smaller than the threshold number.

The iterative processing on the sample image is terminated, when the i^{th} total loss reaches the convergence threshold or i is equal to the threshold number.

In all embodiments of the present disclosure, comparing the i^{th} predicted position of the sample key point with the ground-truth position of the sample key point in the sample image to obtain the i^{th} prediction difference of the sample key point may adopt but is not limited to the following equation. ${L}_{pi} = MSE \left({pred}_{i}, GT\right)$

represents the i^{th} prediction difference of the sample key point, *predᵢ* represents the i^{th} predicted position of the sample key point, and *GT* represents the ground-truth position of the sample key point.

In all embodiments of the present disclosure, calculating the i^{th} key-point prediction loss may adopt but is not limited to the following equation. ${L}_{pose} = {\sum }_{x = 1}^{i} MSE \left({pred}_{x}, GT\right)$

*predₓ* represents the x^{th} predicted position of the sample key point, *GT* represents the ground-truth position of the sample key point, and 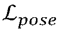 represents the i^{th} key-point prediction loss.

In all embodiments of the present disclosure, calculating the i^{th} total loss may adopt but is not limited to the following equation. $L = {L}_{pose} + {α}_{1} {L}_{kt} + {α}_{2} {L}_{vt}$

In the formula, represents the key-point prediction loss, 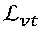 represents the image feature loss, 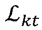 represents the key-point feature loss, and 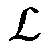 represents the total loss.

The above are merely examples of the above operations. The operations may be implemented in another manner. The present disclosure is not limited to these examples.

Here the initial feature processing network and the fully-connected layer connected to the feature processing network are jointly trained based on iterative self-distillation, so as to obtain an available feature processing network and fully-connected layer. The accuracy of network calculation results is ensured, and at the same time, the time consumed for network training is reduced. In iterative training of the feature processing network, new sample data is continuously generated (i.e., the features of the sample image and the features of the key point obtained after iteration may serve as new sample data), so that the resources consumed in the training process can be greatly reduced. Therefore, the issue of low image recognition efficiency in an image recognition means provided in the related art is addressed, and the technical effect of improving the image recognition efficiency is achieved.

In all embodiments of the present disclosure, a method for preprocessing a network for image recognition may comprise following operations.

M sample images and an initial feature processing network are obtained, and the initial feature processing network is trained using the N images to obtain a feature processing network. The training comprises following operations.

An initial image feature is extracted from the k^{th} sample image of the M sample image, and an initial feature (also called initial feature as described in foregoing embodiments) of a sample key point of a first object in the k^{th} sample image is obtained. M is a positive integer, and k is an integer in a range from 1 to M.

Iterative processing is performed on the initial image feature of the sample image and the initial feature of the sample key point, until the iterative processing reaches a convergence threshold or the iterative processing reaches the N iterations. The i^{th} iteration comprises following operations, where N is an integer and i is an integer in a range from 1 to N.

The (i-1)^{th} sample feature pair, which is obtained in the (i-1)^{th} iteration, is processed through the (i-1)^{th} version of the feature processing network to obtain the i^{th} sample feature pair, where the initial image feature and the initial feature of the sample key point serve as the 0^{th} sample feature pair and the initial feature processing network serves as the 0^{th} version for the case of k = 1.

A feature distance between the (i-1)^{th} sample feature pair and the i^{th} sample feature pair is determined according to a difference between the (i-1)^{th} sample feature pair and the i^{th} sample feature pair.

A weighted sum of all feature distances obtained from the first iteration through the i^{th} iteration is calculated to obtain an i^{th} feature loss. The parameters of the (i-1)^{th} version of the feature processing network are adjusted to obtain the i^{th} version of the feature processing network for the (i+1)^{th} iteration, when the i^{th} feature loss does not reach the convergence condition and i is smaller than the threshold number.

In the above case, the iterative processing proceeds to the (i+1)^{th} iteration.

Otherwise, when the i^{th} feature loss reaches the convergence threshold or i is equal to the threshold number, the iterative processing is terminated.

Here N indicates the maximum number of iterations that is allowed on each sample image during the training of the feature processing network, and the training is also stopped when the convergence condition is reached for a certain sample. It is appreciated that the termination on the convergence condition is only triggered before or when the iterations reach the maximum number. For example, if there are M sample images, the iterative training on each sample image is limited to a maximum of x iterations. It is assumed that when the feature processing network is trained using the 2^{nd} sample image, the feature processing network still does not reach the convergence condition after x iterations, and the iterative training still stops, i.e., N = x. It is assumed that when the feature processing network is trained using the 3^{rd} sample image, the feature processing network reaches the convergence condition (e.g., the feature loss is smaller than or equal to a threshold) after the 2^{nd} iteration, and the iterative training stops even if the iterative training still does not reach the x iterations.

In all embodiments of the present disclosure, when the i^{th} feature loss does not reach the convergence condition and after adjusting the parameters of the (i-1)^{th} version of the feature processing network to obtain an i^{th} version of the feature processing network for the (i+1)^{th} iteration, it may be then determined whether i is equal to the maximum number of iterations.

In all embodiments of the present disclosure, the i^{th} iteration of the iterative processing may further include but is not limited to the following operations. When i is determined to be smaller than the maximum number of iterations, the iterative processing proceeds to the (i+1)^{th} iteration. When i is determined to be equal to the maximum number of iterations, the i^{th} iteration is determined to be the last iteration of the iterative processing.

In all embodiments of the present disclosure, when the i^{th} feature loss reaches the convergence condition and the iterative processing on the sample image terminates, the i^{th} iteration may comprise a following operation. The (i-1)^{th} version of the feature processing network is determined to serve as a converged feature processing network.

Herein a manner of extracting the initial feature from the k^{th} sample image may refer to, but is not limited to, that of extracting the image feature from the first image as described above. The present disclosure is not limited to these examples. In an embodiment, M may be but is not limited to a total number of the sample images.

In all embodiments of the present disclosure, determining the feature distance between the (i-1)^{th} sample feature pair and the i^{th} sample feature pair according to the difference between the (i-1)^{th} sample feature pair and the i^{th} sample feature pair may comprise following operations. An (i-1)^{th} image feature distance is calculated, where the (i-1)^{th} image feature distance is a distance between the (i-1)^{th} feature of the sample image in the (i-1)^{th} sample feature pair and the i^{th} feature of the sample image in the i^{th} sample feature pair. An (i-1)^{th} key-point feature distance is calculated, where the (i-1)^{th} key-point feature distance is a distance between the (i-1)^{th} feature of the sample key point in the (i-1)^{th} sample feature pair and the i^{th} feature of the sample key point in the i^{th} sample feature pair. The feature distance between the (i-1)^{th} sample feature pair and the i^{th} sample feature pair comprises the (i-1)^{th} image feature distance and the (i-1)^{th} key-point feature distance.

In all embodiments of the present disclosure, calculating the weighted sum of all feature distances obtained from the first iteration through the i^{th} iteration to obtain the i^{th} feature loss may comprise following operations. An image feature loss is calculated, where the image feature loss is a weighted sum of all image feature distances obtained from the first iteration through the i^{th} iteration. A key-point feature loss is calculated, where the key-point feature loss is a weighted sum of all key-point feature distances obtained from the first iteration through the i^{th} iteration. The i^{th} feature loss is calculated, where the i^{th} feature loss is a weighted sum of the image feature loss and the key-point feature loss.

Other details may refer to the foregoing embodiments regarding the method for image recognition. Details are not repeated herein.

Here the initial feature processing network is trained based on the iterative self-distillation so as to obtain an available feature processing network. The accuracy of network calculation results is ensured, and at the same time, the time consumed for network training is reduced. In the iterative training process of the feature processing network, new sample data is continuously generated (i.e., the features of the sample image and the features of the key point obtained after each iteration may be used as new sample data), so that the resources occupied by the training process can be greatly reduced. Therefore, the issue of low image recognition efficiency in an image recognition means provided in the related art is addressed, and the technical effect of improving the image recognition efficiency is achieved.

In all embodiments of the present disclosure, after processing, through the (i-1)^{th} version of the feature processing network, the (i-1)^{th} sample feature pair obtained through the (i-1)^{th} iteration to obtain the i^{th} sample feature pair, the method may further comprise following operations.

The i^{th} feature of the sample key point in the i^{th} sample feature pair are inputted into an (i-1)^{th} version of a fully-connected layer to obtain an i^{th} predicted position of the sample key point.

The i^{th} predicted position of the sample key point is compared with a ground-truth position of the sample key point in the sample image to obtain an i^{th} prediction difference of the sample key point.

An i^{th} key-point prediction loss is calculated, where the i^{th} key-point prediction loss is a weighted sum of the prediction differences of the sample key point obtained from the 1^{st} iteration through the i^{th} iteration.

An i^{th} total loss is calculated, where the i^{th} total loss is a weighted sum of the i^{th} feature loss and the i^{th} key-point prediction loss.

The parameters of the (i-1)^{th} version of the feature processing network are adjusted to obtain the i^{th} version of the feature processing network for the (i+1)^{th} iteration and adjusting parameters of the (i-1)^{th} version of the fully-connected layer to obtain an i^{th} version of the fully-connected layer for the (i+1)^{th} iteration, when the i^{th} total loss does not reach the convergence condition and i is smaller than the threshold number.

The iterative processing on the sample image is terminated, when the i^{th} total loss reaches the convergence threshold or i is equal to the threshold number.

Other details may refer to the foregoing embodiments regarding the method for image recognition. Details are not repeated herein.

Here the initial feature processing network and the fully-connected layer connected to the feature processing network are jointly trained based on iterative self-distillation, so as to obtain an available feature processing network and fully-connected layer. The accuracy of network calculation results is ensured, and at the same time, the time consumed for network training is reduced. In iterative training of the feature processing network, new sample data is continuously generated (i.e., the features of the sample image and the features of the key point obtained after iteration may serve as new sample data), so that the resources consumed in the training process can be greatly reduced. Therefore, the issue of low image recognition efficiency in an image recognition means provided in the related art is addressed, and the technical effect of improving the image recognition efficiency is achieved.

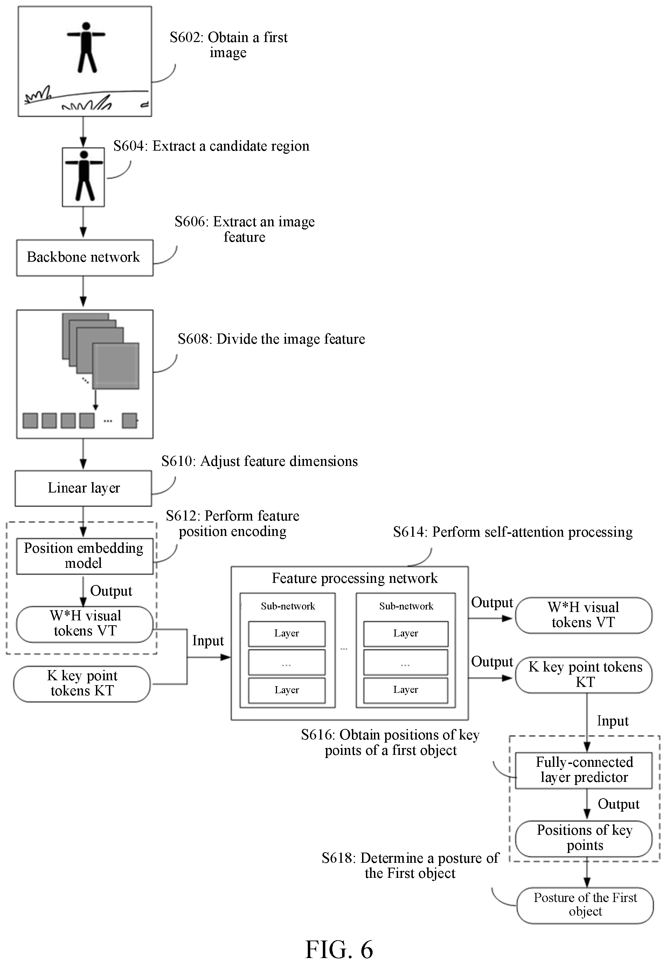

Hereinafter illustrated is an example in which the method for image recognition is applied to a posture estimation scenario. The method may comprise but is not limited to the following operations as shown in FIG. 6:
S602: A first image is obtained.
S604: A candidate region is extracted. Specifically, the candidate region of a first object is determined from the first image by using a region recognition network, such that the candidate region is cropped from the first image.
S606: An image feature is extracted. Specifically, the image feature corresponding to content displayed in the candidate region is extracted by using a Backbone network.
S608: The image feature is divided. Specifically, the image feature is divided into a plurality of image sub-features.
S610: Feature dimensions are adjusted. Specifically, the feature dimensions of the image sub-features are adjusted by using a Linear network to obtain the adjusted image feature.
S612: Feature position encoding is performed. Specifically, position encoding is performed on the adjusted image feature by using a Position Embedding network to obtain W*H visual tokens VT (i.e., the foregoing the image feature).
S614: Self-attention processing is performed. Specifically, *K* key-point tokens KT (i.e., the foregoing initial key-point feature) are inputted to a self-attention layer model (i.e., the foregoing feature processing network) to obtain W*H visual tokens VT1 and *K* key-point tokens KT1 processed by using an self-attention mechanism, and the *K* key-point tokens KT1 processed by using the self-attention mechanism are the foregoing final key-point feature. For obtaining the feature processing network, iterative processing limited by a maximum number of N iterations is performed on each sample image to train an initial feature processing network. The (i-1)^{th} version of the feature processing network is responsible for the i^{th} iteration of the iterative processing. In the i^{th} iteration, the (i-1)^{th} sample feature pair obtained in the (i-1)^{th} iteration is processed to obtain the i^{th} sample feature pair, and network parameters of the (i-1)^{th} version of the feature processing network are adjusted based on the between the (i-1)^{th} sample feature pair and the i^{th} sample feature pair. The iterative processing is performed until the convergence condition is reached or the N iterations have been performed. N is a positive integer. i is greater than or equal to 1 and less than or equal to N.
S616: Positions of key points of the first object are obtained. Specifically, the *K* key-point tokens, which have been processed by using the self-attention mechanism, are inputted to a fully-connected layer predictor (i.e., the foregoing fully-connected layer connected to the feature processing network above) to obtain the positions of the key points of the first object in the first image.
S618: A posture of the first object is determined. Specifically, a motion posture of the first object in the first image is determined by using the positions of the key points of the first object in the first image.

Here the feature processing network obtained based on the iterative self-distillation training is configured for locating the positions, in the first image, of the key points of the first object in the first image. The accuracy of network calculation results is ensured, and at the same time, the time consumed for network training is reduced. The technical problem of low image recognition efficiency in an image recognition means provided in the related art is further solved, and the technical effect of improving the image recognition efficiency is achieved.

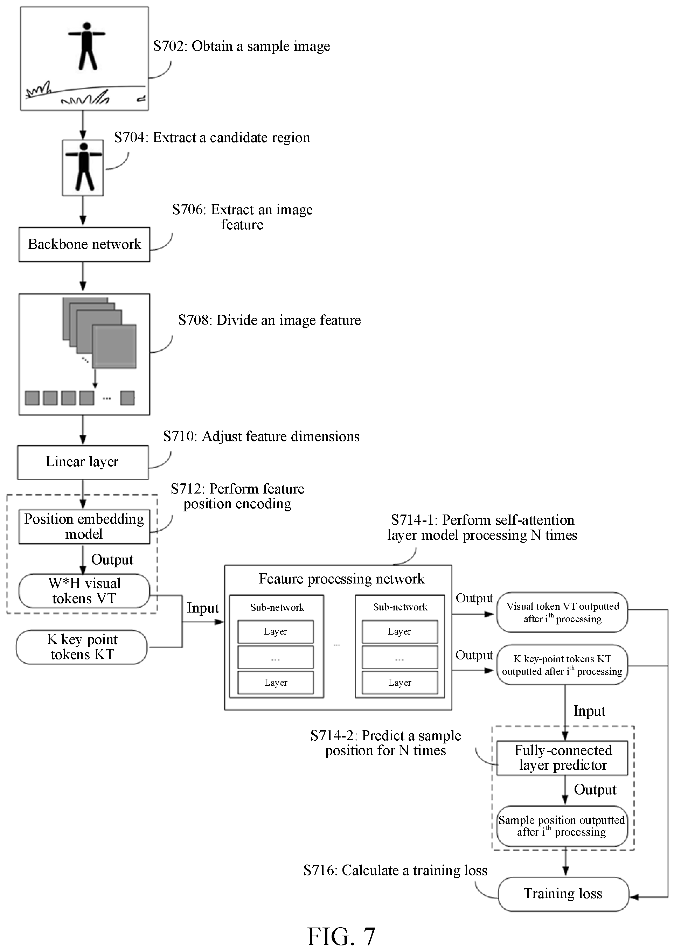

Hereinafter illustrated is an example of the method for preprocessing a network for image recognition. The method may comprise but is not limited to the following operations as shown in FIG. 7.

S702: A sample image is obtained. Then, S704 to S712 are performed to extract a candidate region. Specifically, the candidate region of the first object in the sample image is determined from the first image by using the region recognition network, and the candidate region is cropped from the sample image. An image feature is extracted. Specifically, the image feature of content displayed in the candidate region is extracted by using a Backbone network. The image feature is divided. Specifically, the image feature is divided into a plurality of sub-image features. Feature dimensions are adjusted. Specifically, the dimensions of the image sub-features are adjusted by using a Linear network to obtain the adjusted image feature. Feature position encoding is performed. Specifically, position encoding is performed on the adjusted image feature by using a Position Embedding network to obtain W*H visual tokens VT (i.e., the foregoing initial image feature of the sample image).

Next, in S714-1, self-attention layer model performs iterative processing that has N iterations. Specifically, *K* key-point tokens KT (i.e., the foregoing initial feature of the key point) are inputted into a self-attention layer model (i.e., the foregoing feature processing network) and are iteratively processed through the self-attention layer model. For the *i*^{th} iteration, the output of the self-attention layer model is a new visual token *VTᵢ* and key-point token *KTᵢ*, and the input is visual token *VT*_{*i*-1} and key-point token *KT*_{*i*-1} obtained in the previous iteration. In S714-1, and the sample position are predicted for N times. Specifically, for the key-point token *KTᵢ*, *i* ∈ {1,2 ... *N*} outputted in each iteration, the key-point token is sent to the same fully-connected layer predictor to obtain a posture estimation *predᵢ*, *i* ∈ {1,2 ... *N*}. Each posture estimation includes K key point coordinates *x̂ᵢ*, *i* ∈ {1,2 ... *K*} indicating a posture.

Further, in S716, a training loss is calculated. Specifically, a sum 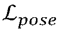 of MSE distances between all training prediction posture estimation outputs and the target posture is obtained, a total loss 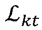 of all pairs of key-point tokens KT in adjacent iterations is obtained, a total loss 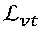 of all pairs of visual tokens VT in adjacent iterations is obtained, and a training loss value is generated by using 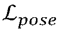 *,* 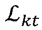 *,* and 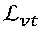 *.* Further, when the training loss is lowered to a threshold, the self-attention layer model and the fully-connected layer predictor are determined to reach the convergence condition. Otherwise, the training of the self-attention layer model and the fully-connected layer predictor continues using the similar operations.

In the embodiments of the present disclosure, the initial feature processing network is trained based on iterative self-distillation manner so as to obtain an available feature processing network. The accuracy of network calculation results is ensured, and at the same time, the time consumed for network training is reduced. In a self-cyclic iterative training process of the feature processing network, new sample data is continuously generated (i.e., the feature of the sample images and the feature of the key points obtained after each cycle of feature processing may be used as new sample data), so that the resource loss in the training process can be greatly reduced. Therefore, the issue of low image recognition efficiency in an image recognition means provided in the related art is addressed, and the technical effect of improving the image recognition efficiency is achieved.

**Table 1: Comparison of results between the solution of the present disclosure and the solution in related art on verification set of public dataset MSCOCO [8]**

| Manner | Backbone network | Input size | Parameter quantity (M) | GFLOPs | mAP(%) |
|---|---|---|---|---|---|
| SimpleBaselines[1] | ResNet-50[6] | 256 × 192 | 34.0 | 8.90 | 70.4 |
| SimpleBaselines[1] | ResNet-152[6] | 256 × 192 | 68.6 | 15.70 | 72.0 |
| TokenPose[2] | Stemnet[5] | 256 × 192 | 6.6 | 2.4 | 69.5 |
| OKDHP[3] | Hourglass[9] | 256 × 192 | 13.0 | 25.5 | 72.8 |
| PPT[4] | Stemnet[5] | 256 × 192 | 6.6 | 2.0 | 70.8 |
| PPT[4] | HRNet-W32 [7] | 256 × 192 | 13.2 | 4.7 | 73.4 |
| DistilPose-S[5] | Stemnet[5] | 256 × 192 | 5.4 | 2.38 | 71.6 |
| This embodiment | Stemnet[5] | 256 × 192 | 4.4 | 1.8 | 69.7 |
| This embodiment | Stemnet[5] | 256 × 192 | 6.6 | 2.4 | 72.3 |
| This embodiment | HRNet-W32 [7] | 256 × 192 | 13.2 | 5.2 | 73.7 |

Table 1 shows effects of this embodiment and other related art in the field of posture estimation on the verification set of the public dataset (MSCOCO). Evaluation metrics including parameter quantity, GFLOPs and mAP. The parameter quantity and the GFLOPs represent a model speed, and the smaller parameter quantity and GFLOPs, the faster the model runs. mAP represents a model prediction accuracy, and the higher the mAP, indicates the more accurate the model prediction. Herein, ResNet-50 and Stemnet are small backbone networks, and ResNet-152 and HRNet are large backbone networks. The larger W coefficient of the HRNet, the deeper and wider network layers and the larger the model. In comparison, ResNet-50 is larger than Stemnet, and HRNet-W32 and ResNet-152 have a small difference in size. That is, the effect of the solution provided by the present disclosure is far superior to that of the related art.

Herein the method embodiments are described as a series of action combinations for ease of understanding. However, a person skilled in the art is to know that the present disclosure is not limited to the above-described order of the actions because some operations may be performed in another order or performed at the same time. In addition, a person skilled in the art can appreciate that all the embodiments described in this specification are exemplary embodiments, and the related actions and modules may not be necessary to the present disclosure.

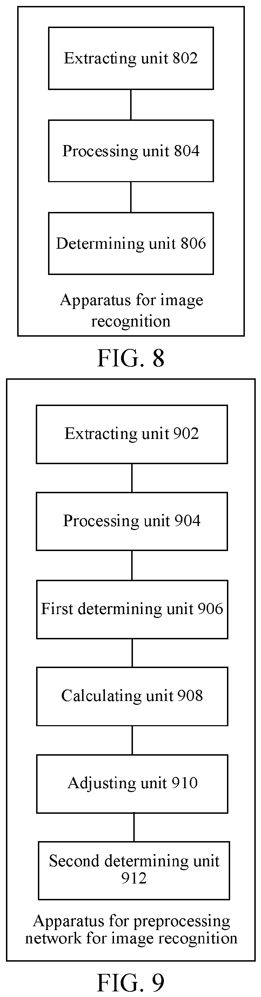

According to another aspect of embodiments of the present disclosure, an apparatus for image recognition for implementing the method for image recognition is further provided. As shown in FIG. 8, the apparatus comprises an extracting unit 802, a processing unit 804, and a determining unit 806.

The extracting unit 802 is configured for extracting an image feature from a first image of a first object.

The processing unit 804 is configured for processing, through a feature processing network, the image feature, and an initial feature of a key point of the first object to obtain a final key-point feature of the first object. The final key-point feature indicates a position of the key point in the first image, the feature processing network is obtained through training an initial feature processing network using one or more sample images, the training comprises performing, for each sample image, iterative processing on said sample image until a convergence condition is met or a quantity of iterations in the iterative process reaches a threshold number. Each iteration of the iterative processing comprises: processing a sample feature pair of an immediately previous iteration to obtain a sample feature pair of said iteration, and adjusting parameters of a version of the feature processing network of the immediately previous iteration according to a difference between the sample feature pairs of the immediately previous iteration and said iteration to obtain a version of the feature processing network of said iteration. The sample feature pair of each iteration comprises a respective feature of the sample image and a respective feature of a sample key point of the first object in said sample image. For an earliest iteration of the iterative processing, the initial feature processing network serves as the version of the feature processing network of the immediately previous iteration, and an initial image feature extracted from said sample image and an initial feature of the sample key point serve as the sample feature pair of the immediately previous iteration.

The determining unit 806 is configured for determining the position of the key point in the first image using the final key-point feature.

In all embodiments of the present disclosure, the feature processing network may comprise P sub-networks, P is a positive integer, and the processing unit may comprise an input module, a feature processing module, and a determining module. The input module is configured for inputting a (j-1)^{th} image feature and a (j-1)^{th} key-point feature, which are outputted from a (j-1)^{th} sub-network in the feature processing network, into a j^{th} sub-network in the feature processing network. The feature processing module is configured for processing the (j-1)^{th} image feature and the (j-1)^{th} key-point feature through the j^{th} sub-network to obtain a j^{th} image feature and a j^{th} key-point feature. The determining module is configured for: when j is equal to P, determining the j^{th} key-point feature to serve as the final key-point feature; and when j is less than P, outputting the j^{th} image feature and the j^{th} key-point feature from the j^{th} sub-network to a (j+1)^{th} sub-network in the feature processing network.

In all embodiments of the present disclosure, the feature processing module may be further configured for: performing, through a first layer of the j^{th} sub-network, linear transformation on the (j-1)^{th} image feature to obtain a first image sub-feature; performing, through a first layer of the j^{th} sub-network, the linear transformation on the (j-1)^{th} key-point feature to obtain a first key-point sub-feature; and for each integer h from 2 through a quantity of layers in the j^{th} sub-network, inputting an (h-1)^{th} image sub-feature and an (h-1)^{th} key-point sub-feature, which are outputted from an (h-1)^{th} layer of the j^{th} sub-network, into an h^{th} layer in the j^{th} sub-network, performing, through the h^{th} layer, the linear transformation on the (h-1)^{th} image sub-feature to obtain a first result, wherein the first result serves as an h^{th} image sub-feature, performing, through the h^{th} layer, the linear transformation on the (h-1)^{th} key-point sub-feature to obtain a second result, obtaining, through the h^{th} layer, an h^{th} key-point sub-feature according to the first result and the second result, and determining, when h is equal to the quantity of layers in the j^{th} sub-network, the h^{th} image sub-feature and the h^{th} key-point sub-feature to serve as the j^{th} image feature and the j^{th} key-point feature, respectively.

In all embodiments of the present disclosure, the apparatus may further comprise a first extraction unit, a first feature processing unit, a first determining unit, a calculation unit, an adjusting unit, and a second determining unit. The first extraction unit is configured for extracting the initial feature from a sample image among the one or more sample images and obtaining the initial feature of the sample key point. The first feature processing unit is configured for processing, through an (i-1)^{th} version of the feature processing network, the (i-1)^{th} sample feature pair obtained in the (i-1)^{th} iteration to obtain the i^{th} sample feature pair, wherein iterative processing is performed on the initial feature of the sample image and the initial feature of the sample key point, i is an integer ranging from 1 through a quantity of iterations in the iterative processing, iterations of the iterative processing comprises an i^{th} iteration and an (i-1)^{th} iteration immediately previous to the i^{th} iteration, and the initial image feature and the initial feature of the sample key point serve as the zero-th sample feature pair. The first determining unit is configured for determining a feature distance between the (i-1)^{th} sample feature pair and the i^{th} sample feature pair according to a difference between the (i-1)^{th} sample feature pair and the i^{th} sample feature pair. The calculation unit is configured for calculating a weighted sum of all feature distances obtained from the first iteration through the i^{th} iteration to obtain an i^{th} feature loss. The adjusting unit is configured for: adjusting the parameters of the (i-1)^{th} version of the feature processing network to obtain an i^{th} version of the feature processing network for the (i+1)^{th} iteration, when the i^{th} feature loss does not reach the convergence condition and i is smaller than the threshold number. The second determining unit is configured for terminating the iterative processing, when the i^{th} feature loss reaches the convergence threshold or i is equal to the threshold number.

In all embodiments of the present disclosure, the first determining unit may comprise a first calculation module and a second calculation module. The first calculation module is configured for calculating an (i-1)^{th} image feature distance, where the (i-1)^{th} image feature distance is a distance between the (i-1)^{th} feature of the sample image in the (i-1)^{th} sample feature pair and the i^{th} feature of the sample image in the i^{th} sample feature pair. The second calculation module is configured for calculating an (i-1)^{th} key-point feature distance, wherein the (i-1)^{th} key-point feature distance is a distance between the (i-1)^{th} feature of the sample key point in the (i-1)^{th} sample feature pair and the i^{th} feature of the sample key point in the i^{th} sample feature pair.

In all embodiments of the present disclosure, the first determining unit may further comprise a third calculation module and a fourth calculation module. The third calculation module is configured for: calculating an image feature loss, where the image feature loss is a weighted sum of all image feature distances obtained from the first iteration through the i^{th} iteration; and calculating a key-point feature loss, where the key-point feature loss is a weighted sum of all key-point feature distances obtained from the first iteration through the i^{th} iteration. The fourth calculation module is configured for calculating the i^{th} feature loss, where the i^{th} feature loss is a weighted sum of the image feature loss and the key-point feature loss.

In all embodiments of the present disclosure, the apparatus may further comprise a first input unit, a comparison unit, a first calculation unit, a second calculation unit, a first adjusting unit, and a third determining unit. The first input unit is configured for inputting the i^{th} feature of the sample key point in the i^{th} sample feature pair into an (i-1)^{th} version of a fully-connected layer to obtain an i^{th} predicted position of the sample key point. The comparison unit is configured for comparing the i^{th} predicted position of the sample key point with a ground-truth position of the sample key point in the sample image to obtain an i^{th} prediction difference of the sample key point. The first calculation unit is configured for calculating an i^{th} key-point prediction loss, wherein the i^{th} key-point prediction loss is a weighted sum of the prediction differences of the sample key point obtained from the first iteration through the i^{th} iteration. The second calculation unit is configured for calculating an i^{th} total loss, wherein the i^{th} total loss is a weighted sum of the i^{th} feature loss and the i^{th} key-point prediction loss. The first adjusting unit is configured for adjusting the parameters of the (i-1)^{th} version of the feature processing network to obtain the i^{th} version of the feature processing network for the (i+1)^{th} iteration and adjusting parameters of the (i-1)^{th} version of the fully-connected layer to obtain an i^{th} version of the fully-connected layer for the (i+1)^{th} iteration, when the i^{th} total loss does not reach the convergence condition and i is smaller than the threshold number. The third determining unit is configured for terminating the iterative processing, when the i^{th} total loss reaches the convergence threshold or i is equal to the threshold number.

Details may refer to the foregoing embodiments of the method for image recognition above and are not repeated herein.

According to another aspect of embodiments of the present disclosure, an apparatus for preprocessing a network for image recognition is further provided for implementing the method for preprocessing the network for image recognition. As shown in FIG. 9, the apparatus comprises an extracting unit 902, a processing unit 904, a first determining unit 906, a calculating unit 908, and a second determining unit 912.

The extracting unit 902 is configured for extracting an initial image feature from a sample image and obtaining an initial feature of a sample key point of the first object in said sample image.

The feature processing unit 904 is configured for processing, through an (i-1)^{th} version of the feature processing network, the (i-1)^{th} sample feature pair obtained in the (i-1)^{th} iteration to obtain the i^{th} sample feature pair, where iterative processing is performed on the initial feature of the sample image and the initial feature of the sample key point, i is an integer ranging from 1 through a quantity of iterations in the iterative processing, iterations of the iterative processing comprises an i^{th} iteration and an (i-1)^{th} iteration immediately previous to the i^{th} iteration, and the initial image feature and the initial feature of the sample key point serve as the zero-th sample feature pair.

The first determining unit 906 is configured for determining a feature distance between the (i-1)^{th} sample feature pair and the i^{th} sample feature pair according to a difference between the (i-1)^{th} sample feature pair and the i^{th} sample feature pair.

The calculating unit 908 is configured for calculating a weighted sum of all feature distances obtained from the first iteration through the i^{th} iteration to obtain an i^{th} feature loss.

The adjusting unit 910 is configured for adjusting the parameters of the (i-1)^{th} version of the feature processing network to obtain an i^{th} version of the feature processing network for the (i+1)^{th} iteration, when the i^{th} feature loss does not reach the convergence condition and i is smaller than the threshold number.

The second determining unit 912 is configured for terminating the iterative processing, when the i^{th} feature loss reaches the convergence threshold or i is equal to the threshold number.

In all embodiments of the present disclosure, the apparatus further comprises: an input unit, a comparison unit, a first calculation unit, a second calculation unit, a first adjusting unit, and a third determining unit. The input unit is configured for inputting the i^{th} feature of the sample key point in the i^{th} sample feature pair into an (i-1)^{th} version of a fully-connected layer to obtain an i^{th} predicted position of the sample key point. The comparison unit is configured for comparing the i^{th} predicted position of the sample key point with a ground-truth position of the sample key point in the sample image to obtain an i^{th} prediction difference of the sample key point. The first calculation unit is configured for calculating an i^{th} key-point prediction loss, wherein the i^{th} key-point prediction loss is a weighted sum of the prediction differences of the sample key point obtained from the first iteration through the i^{th} iteration. The second calculation unit is configured for calculating an i^{th} total loss, wherein the i^{th} total loss is a weighted sum of the i^{th} feature loss and the i^{th} key-point prediction loss. The first adjusting unit is configured for adjusting the parameters of the (i-1)^{th} version of the feature processing network to obtain the i^{th} version of the feature processing network for the (i+1)^{th} iteration and adjusting parameters of the (i-1)^{th} version of the fully-connected layer to obtain an i^{th} version of the fully-connected layer for the (i+1)^{th} iteration, when the i^{th} total loss does not reach the convergence condition and i is smaller than the threshold number. The third determining unit is configured for terminating the iterative processing, when the i^{th} total loss reaches the convergence threshold or i is equal to the threshold number.

Details may refer to the foregoing embodiments of the method for preprocessing a network for image recognition above and are not repeated herein.

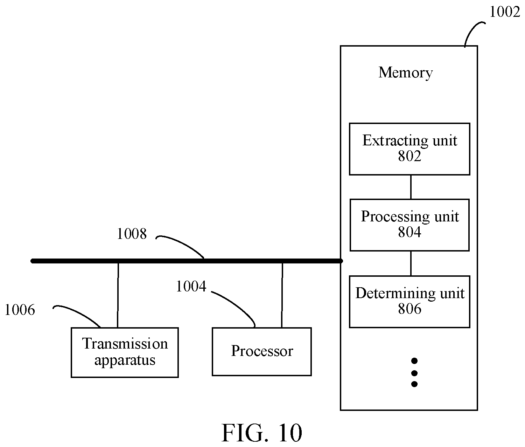

According to another aspect of embodiments of the present disclosure, an electronic device for implementing the method for image recognition is further provided. The electronic device may be a terminal device or a server as shown in FIG. 1. This embodiment is described by taking the electronic device being a terminal as an example. As shown in FIG. 10, the electronic device includes a memory 1002 and a processor 1004. The memory 1002 has a computer program stored therein, and the processor 1004 is configured to perform operations in any one of the method embodiments through the computer program.

In this embodiment, the electronic device may be located in at least one of a plurality of network devices in a computer network.

In this embodiment, the processor may be configured to perform the operations of any one method embodiment through the computer program.

In an embodiment, a person of ordinary skill in the art may understand that a structure shown in FIG. 10 is merely an example. The electronic device may also be a terminal device such as a smartphone (such as an Android mobile phone or an iOS mobile phone), a tablet computer, a palmtop computer, a mobile Internet device (MID), or a PAD. FIG. 10 does not construct limitation to the structure of the electronic device. For example, the electronic device may further include more or fewer components (such as a network interface) than those shown in FIG. 10, or may have a configuration different from that shown in FIG. 10.

The memory 1002 may be configured to store a software program and a module, such as a program instruction/module corresponding to the method for image recognition and apparatus in the embodiments of the present disclosure. The processor 1004 runs the software program and the module stored in the memory 1002 to execute various functional applications and data processing, and the method for image recognition is realized. The memory 1002 may include a high-speed random access memory, and may further include a non-volatile memory, such as one or more magnetic disk storage apparatuses, flash memories, or other volatile solid-state memories. In all embodiments of the present disclosure, the memory 1002 may further include memories remotely disposed relative to the processor 1004. These remote memories may be connected to the terminal over a network. Examples of the network include but are not limited to the Internet, an intranet, a local area network, a mobile communication network, and a combination thereof. The memory 1002 may be but is not limited to be configured to store the first image. In an example, as shown in FIG. 10, the memory 1002 may include but is not limited to the extraction unit 802, the feature processing unit 804, and the determining unit 806 in the apparatus for image recognition. In addition, the memory may further include but is not limited to another module unit in the apparatus for image recognition. Details are not described in this example again.

In an embodiment, the transmission apparatus 1006 is configured to receive or send data over a network. Specific examples of the network may include a wired network and a wireless network. In an example, the transmission apparatus 1006 includes a network interface controller (NIC) which may be connected to another network device and a router through a network cable so as to communicate with the Internet or a local area network. In an example, the transmission apparatus 1006 is a radio frequency (RF) module, and is configured to be communicated with the Internet in a wireless manner.

In addition, the electronic device further includes a connection bus 1008 configured to connect each module component in the electronic device.

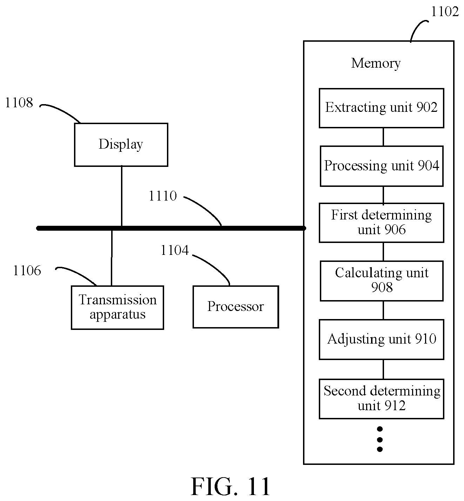

According to another aspect of embodiments of the present disclosure, an electronic device for implementing the method for preprocessing a network for image recognition is further provided. The electronic device may be a terminal device or a server as shown in FIG. 1. This embodiment is described by taking the electronic device being a server as an example. As shown in FIG. 11, the electronic device includes a memory 1102 and a processor 1104. The memory 1102 has a computer program stored therein, and the processor 1104 is configured to perform operations in any one of the method embodiments through the computer program.

In this embodiment, the electronic device may be located in at least one of a plurality of network devices in a computer network.

In this embodiment, the processor may be configured to perform the following operations through the computer program.

One or more sample images and an initial feature processing network are obtained. The initial feature processing network is trained using the one or more sample images to obtain a feature processing network.

The training comprises following operations, for each sample image among the one or more sample images. A random initial image feature is extracted from said sample image. An initial feature of a sample key point of a first object in the sample image is obtained.

Iterative processing is performed on the initial image feature of the sample image and the initial feature of the sample key point. For each integer i from 1 through a quantity of iterations in the iterative processing, the i^{th} iteration of the iterative processing comprises following operations.

The (i-1)^{th} sample feature pair obtained in the (i-1)^{th} iteration is processed through an (i-1)^{th} version of the feature processing network to obtain the i^{th} sample feature pair, where the initial image feature and the initial feature of the sample key point serve as the zero-th sample feature pair.

A feature distance between the (i-1)^{th} sample feature pair and the i^{th} sample feature pair is determined according to a difference between the (i-1)^{th} sample feature pair and the i^{th} sample feature pair.

A weighted sum of all feature distances obtained from the first iteration through the i^{th} iteration is calculated to obtain an i^{th} feature loss.

The parameters of the (i-1)^{th} version of the feature processing network tare adjusted to obtain an i^{th} version of the feature processing network for the (i+1)^{th} iteration, when the i^{th} feature loss does not reach the convergence condition and i is smaller than the threshold number; and
The iterative processing is terminated when the i^{th} feature loss reaches the convergence threshold or i is equal to the threshold number.

In an embodiment, a person of ordinary skill in the art may understand that a structure shown in FIG. 11 is merely an example. The electronic device may also be a terminal device such as a smartphone (such as an Android mobile phone or an iOS mobile phone), a tablet computer, a palmtop computer, a mobile Internet device (MID), or a PAD. FIG. 11 does not construct limitations on the structure of the electronic device. For example, the electronic device may further include more or fewer components (such as a network interface) than those shown in FIG. 11 or may have a configuration different from that shown in FIG. 11.

The memory 1102 may be configured to store a software program and a module, such as a program instruction/module corresponding to the method for preprocessing a network for image recognition and apparatus in the embodiments of the present disclosure. The processor 1104 runs the software program and the module stored in the memory 1102 to execute various functional applications and data processing, and the method for preprocessing a network for image recognition is realized. The memory 1102 may include a high-speed random access memory, and may further include a non-volatile memory, such as one or more magnetic disk storage apparatuses, flash memories, or other volatile solid-state memories. In all embodiments of the present disclosure, the memory 1102 may further include memories remotely disposed relative to the processor 1104, and these remote memories may be connected to the terminal through a network. Examples of the network include but are not limited to the Internet, an intranet, a local area network, a mobile communication network, and a combination thereof. The memory 1102 may be specifically but not limited to be configured to store the sample image. In an example, as shown in FIG. 11, the memory 1102 may include but is not limited to the extraction unit 902, the feature processing unit 904, the first determining unit 906, the calculation unit 908, the adjusting unit 910, and the second determining unit 912 in the apparatus for preprocessing a network for image recognition. In addition, the memory may further include but is not limited to another module unit in the apparatus for preprocessing a network for image recognition. Details are not described in this example again.

In an embodiment, the transmission apparatus 1106 is configured to receive or send data through a network. Specific examples of the network may include a wired network and a wireless network. In an example, the transmission apparatus 1106 includes a network interface controller (NIC) which may be connected to another network device and a router through a network cable so as to be communicated with the Internet or a local area network. In an example, the transmission apparatus 1106 is a radio frequency (RF) module, and is configured to be communicated with the Internet in a wireless manner.

In addition, the electronic device further includes: a display 1108 configured to display the sample image; and a connection bus 1110 configured to connect each module component in the electronic device.

In another embodiment, the terminal device or the server may be a node in a distributed system. The distributed system may be a blockchain system. The blockchain system may be a distributed system formed by connecting a plurality of nodes in a network communication form. A point-to-point network may be formed between nodes. Any form of computing device, such as the server, the terminal, and another electronic device, may join the point-to-point network as a node in the blockchain system.

According to an aspect of the present disclosure, a computer program product is provided. The computer program product includes a computer program/instruction. The computer program/instruction includes a program code for executing the method. In such an embodiment, the computer program may be downloaded from a network through the communication part and installed, and/or installed from a removable medium. When the computer program is executed by a central processing unit, various functions provided in the embodiments of the present disclosure are executed.

According to an aspect of the present disclosure, a computer-readable storage medium is provided. A processor of a computer device reads the computer program from the computer-readable storage medium. The processor executes the computer program, so that the computer device implements the method.

In this embodiment, the computer-readable storage medium may be configured to store the computer program for performing the operations in the method embodiments:
In this embodiment, the computer-readable storage medium may further be configured to store a computer program for performing the following operations in the method for preprocessing a network for image recognition:
One or more sample images and an initial feature processing network are obtained. The initial feature processing network is trained using the one or more sample images to obtain a feature processing network.

The training comprises following operations, for each sample image among the one or more sample images. A random initial image feature is extracted from said sample image. An initial feature of a sample key point of a first object in the sample image is obtained.

Iterative processing is performed on the initial image feature of the sample image and the initial feature of the sample key point. For each integer i from 1 through a quantity of iterations in the iterative processing, the i^{th} iteration of the iterative processing comprises following operations.

The (i-1)^{th} sample feature pair obtained in the (i-1)^{th} iteration is processed through an (i-1)^{th} version of the feature processing network to obtain the i^{th} sample feature pair, where the initial image feature and the initial feature of the sample key point serve as the zero-th sample feature pair.

A feature distance between the (i-1)^{th} sample feature pair and the i^{th} sample feature pair is determined according to a difference between the (i-1)^{th} sample feature pair and the i^{th} sample feature pair.

A weighted sum of all feature distances obtained from the first iteration through the i^{th} iteration is calculated to obtain an i^{th} feature loss.

The parameters of the (i-1)^{th} version of the feature processing network tare adjusted to obtain an i^{th} version of the feature processing network for the (i+1)^{th} iteration, when the i^{th} feature loss does not reach the convergence condition and i is smaller than the threshold number; and
The iterative processing is terminated when the i^{th} feature loss reaches the convergence threshold or i is equal to the threshold number.

Herein the term "module" or "unit" refers to a computer program with a preset function or a part of the computer program and works together with other related parts to achieve a preset target, and may be completely or partially implemented by using software, hardware (for example, a processing circuit or a memory) or a combination thereof. Similarly, one processor (or a plurality of processors or memories) may be configured to realize one or more modules or units. In addition, each module or unit may be a part of an overall module or unit including the module or unit function.

A person of ordinary skill in the art may understand that all or some operations in various methods of the embodiments may be performed by a program instructing relevant hardware of the terminal device. The program may be stored in a computer-readable storage medium. The storage medium may include a flash disk, a read-only memory (ROM), a random-access memory (RAM), a magnetic disk, an optical disc, etc.

When the integrated unit in the embodiments is implemented in the form of a software function unit, and sold or used as an independent product, the integrated unit may be stored in the computer-readable storage medium. Based on such understanding, the technical solutions of the present disclosure essentially, or the part contributing to the related art, or all or some of the technical solutions may be implemented in the form of a software product. The computer software product is stored in a storage medium and includes several instructions for instructing one or more computer devices (which may be a personal computer, a server, a network device, etc.) to implement all or some of the operations of the methods in each embodiment of the present disclosure.

Herein the descriptions of each embodiment have respective focuses. For a part that is not described in detail in an embodiment, reference can be made to related descriptions in other embodiments.

In the several embodiments provided in the present disclosure, the disclosed client may be implemented in other manners. The described apparatus embodiment is merely an example. For example, unit division is merely logical function division, and there may be other division manners during actual implementation. For example, a plurality of units or components may be combined or integrated into another system, or some features may be ignored or not performed. In addition, the mutual coupling, direct coupling or communication connection which is displayed or discussed may be indirect coupling or communication connection through some interfaces, units or modules, or may be implemented in an electronic form or other forms.

The units described as separate parts may or may not be physically separated, and parts displayed as units may or may not be physical units. That is, they may be located in one position, or may be distributed on a plurality of network units. Some or all of the units may be selected according to actual needs to achieve the objectives of the solutions of the embodiments.

In addition, the function units in each embodiment of the present disclosure may be integrated into one processing unit, or each of the units may exist alone physically, or two or more units may be integrated into one unit. The above integrated unit may be implemented in the form of hardware, or may be implemented in a form of a software function unit.

## Claims

1. A method for image recognition, executable by an electronic device, wherein the method comprises:
extracting an image feature from a first image of a first object;
processing, through a feature processing network, the image feature and an initial feature of a key point of the first object to obtain a final key-point feature of the first object, wherein the final key-point feature indicates a position of the key point in the first image, the feature processing network is obtained through training an initial feature processing network using one or more sample images, the training comprises performing, for each sample image, iterative processing on said sample image until a convergence condition is met or a quantity of iterations in the iterative processing reaches a threshold number, and each iteration of the iterative processing comprises:
processing a sample feature pair of an immediately previous iteration to obtain a sample feature pair of said iteration, and
adjusting parameters of a version of the feature processing network of the immediately previous iteration according to a difference between the sample feature pairs of the immediately previous iteration and said iteration to obtain a version of the feature processing network of said iteration,
wherein the sample feature pair of each iteration comprises a respective feature of the sample image and a respective feature of a sample key point of the first object in said sample image, and
wherein for an earliest iteration of the iterative processing, the initial feature processing network serves as the version of the feature processing network of the immediately previous iteration, and an initial image feature extracted from said sample image and an initial feature of the sample key point serve as the sample feature pair of the immediately previous iteration; and
determining the position of the key point in the first image using the final key-point feature.

2. The method according to claim 1, wherein the feature processing network comprises P sub-networks, P is a positive integer, and processing, through the feature processing network, the image feature and the initial feature of the key point of the first object to obtain the final key-point feature of the first object comprises, for each integer j from 2 through P:
inputting a (j-1)^{th} image feature and a (j-1)^{th} key-point feature, which are outputted from a (j-1)^{th} sub-network in the feature processing network, into a j^{th} sub-network in the feature processing network;
processing the (j-1)^{th} image feature and the (j-1)^{th} key-point feature through the j^{th} sub-network to obtain a j^{th} image feature and a j^{th} key-point feature;
when j is equal to P, determining the j^{th} key-point feature to serve as the final key-point feature; and
when j is less than P, outputting the j^{th} image feature and the j^{th} key-point feature from the j^{th} sub-network to a (j+1)^{th} sub-network in the feature processing network.

3. The method according to claim 2, wherein processing the (j-1)^{th} image feature and the (j-1)^{th} key-point feature through the j^{th} sub-network to obtain the j^{th} image feature and the j^{th} key-point feature comprises:
performing, through a first layer of the j^{th} sub-network, linear transformation on the (j-1)^{th} image feature to obtain a first image sub-feature;
performing, through a first layer of the j^{th} sub-network, the linear transformation on the (j-1)^{th} key-point feature to obtain a first key-point sub-feature; and
for each integer h from 2 through a quantity of layers in the j^{th} sub-network,
inputting an (h-1)^{th} image sub-feature and an (h-1)^{th} key-point sub-feature, which are outputted from an (h-1)^{th} layer of the j^{th} sub-network, into an h^{th} layer in the j^{th} sub-network;
performing, through the h^{th} layer, the linear transformation on the (h-1)^{th} image sub-feature to obtain a first result, wherein the first result serves as an h^{th} image sub-feature;
performing, through the h^{th} layer, the linear transformation on the (h-1)^{th} key-point sub-feature to obtain a second result;
obtaining, through the h^{th} layer, an h^{th} key-point sub-feature according to the first result and the second result; and
determining, when h is equal to the quantity of layers in the j^{th} sub-network, the h^{th} image sub-feature and the h^{th} key-point sub-feature to serve as the j^{th} image feature and the j^{th} key-point feature, respectively.

4. The method according to any one of claims 1 to 3, wherein before extracting the image feature from a first image, the method further comprises training an initial feature processing network using sample images, and training the initial feature processing network comprises:
extracting the initial feature from a sample image among the one or more sample images;
obtaining the initial feature of the sample key point; and
performing iterative processing on the initial image feature of the sample image and the initial feature of the sample key point, wherein for each integer i from 1 through a quantity of iterations in the iterative processing, the i^{th} iteration of the iterative processing comprises:
processing, through an (i-1)^{th} version of the feature processing network, the (i-1)^{th} sample feature pair obtained in the (i-1)^{th} iteration to obtain the i^{th} sample feature pair, wherein the initial image feature and the initial feature of the sample key point serve as the zero-th sample feature pair;
determining a feature distance between the (i-1)^{th} sample feature pair and the i^{th} sample feature pair according to a difference between the (i-1)^{th} sample feature pair and the i^{th} sample feature pair;
calculating a weighted sum of all feature distances obtained from the first iteration through the i^{th} iteration to obtain an i^{th} feature loss;
adjusting the parameters of the (i-1)^{th} version of the feature processing network to obtain an i^{th} version of the feature processing network for the (i+1)^{th} iteration, when the i^{th} feature loss does not reach the convergence condition and i is smaller than the threshold number; and
terminating the iterative processing, when the i^{th} feature loss reaches the convergence threshold or i is equal to the threshold number.

5. The method according to claim 4, wherein determining the feature distance between the (i-1)^{th} sample feature pair and the i^{th} iteration according to the difference between the (i-1)^{th} sample feature pair and the i^{th} sample feature pair comprises:
calculating an (i-1)^{th} image feature distance, wherein the (i-1)^{th} image feature distance is a distance between the (i-1)^{th} feature of the sample image in the (i-1)^{th} sample feature pair and the i^{th} feature of the sample image in the i^{th} sample feature pair; and
calculating an (i-1)^{th} key-point feature distance, wherein the (i-1)^{th} key-point feature distance is a distance between the (i-1)^{th} feature of the sample key point in the (i-1)^{th} sample feature pair and the i^{th} feature of the sample key point in the i^{th} sample feature pair;
wherein the feature distance between the (i-1)^{th} sample feature pair and the i^{th} sample feature pair comprises the (i-1)^{th} image feature distance and the (i-1)^{th} key-point feature distance.

6. The method according to claim 5, wherein calculating the weighted sum of all feature distances obtained from the first iteration through the i^{th} iteration to obtain the i^{th} feature loss comprises:
calculating an image feature loss, wherein the image feature loss is a weighted sum of all image feature distances obtained from the first iteration through the i^{th} iteration;
calculating a key-point feature loss, wherein the key-point feature loss is a weighted sum of all key-point feature distances obtained from the first iteration through the i^{th} iteration; and
calculating the i^{th} feature loss, wherein the i^{th} feature loss is a weighted sum of the image feature loss and the key-point feature loss.

7. The method according to any one of claims 4 to 6, wherein after processing, through the (i-1)^{th} version of the feature processing network, the (i-1)^{th} sample feature pair obtained through the (i-1)^{th} iteration to obtain the i^{th} sample feature pair, the method further comprises:
inputting the i^{th} feature of the sample key point in the i^{th} sample feature pair into an (i-1)^{th} version of a fully-connected layer to obtain an i^{th} predicted position of the sample key point;
comparing the i^{th} predicted position of the sample key point with a ground-truth position of the sample key point in the sample image to obtain an i^{th} prediction difference of the sample key point;
calculating an i^{th} key-point prediction loss, wherein the i^{th} key-point prediction loss is a weighted sum of the prediction differences of the sample key point obtained from the first iteration through the i^{th} iteration;
calculating an i^{th} total loss, wherein the i^{th} total loss is a weighted sum of the i^{th} feature loss and the i^{th} key-point prediction loss;
adjusting the parameters of the (i-1)^{th} version of the feature processing network to obtain the i^{th} version of the feature processing network for the (i+1)^{th} iteration and adjusting parameters of the (i-1)^{th} version of the fully-connected layer to obtain an i^{th} version of the fully-connected layer for the (i+1)^{th} iteration, when the i^{th} total loss does not reach the convergence condition and i is smaller than the threshold number; and
terminating the iterative processing, when the i^{th} total loss reaches the convergence threshold or i is equal to the threshold number.

8. A method for preprocessing a network for image recognition, executed by an electronic device, comprising:
obtaining one or more sample images and an initial feature processing network; and
training the initial feature processing network using the one or more sample images to obtain a feature processing network;
wherein training the initial feature processing network using the one or more sample images comprises, for each sample image among the one or more sample images:
extracting an initial image feature from said sample image;
obtaining an initial feature of a sample key point of a first object in said sample image; and
performing iterative processing on the initial image feature of the sample image and the initial feature of the sample key point, wherein for each integer i from 1 through a quantity of iterations in the iterative processing, the i^{th} iteration of the iterative processing comprises:
processing, through an (i-1)^{th} version of the feature processing network, the (i-1)^{th} sample feature pair obtained in the (i-1)^{th} iteration to obtain the i^{th} sample feature pair, wherein the initial image feature and the initial feature of the sample key point serve as the zero-th sample feature pair;
determining a feature distance between the (i-1)^{th} sample feature pair and the i^{th} sample feature pair according to a difference between the (i-1)^{th} sample feature pair and the i^{th} sample feature pair;
calculating a weighted sum of all feature distances obtained from the first iteration through the i^{th} iteration to obtain an i^{th} feature loss;
adjusting the parameters of the (i-1)^{th} version of the feature processing network to obtain an i^{th} version of the feature processing network for the (i+1)^{th} iteration, when the i^{th} feature loss does not reach the convergence condition and i is smaller than a threshold number; and
terminating the iterative processing, when the i^{th} feature loss reaches the convergence threshold or i is equal to the threshold number.

9. An apparatus for image recognition, arranged in an electronic device, wherein the apparatus comprises:
an extracting unit, configured for extracting an image feature from a first image of a first object;
a processing unit, configured for processing, through a feature processing network, the image feature and an initial feature of a key point of the first object to obtain a final key-point feature of the first object, wherein the final key-point feature indicates a position of the key point in the first image, the feature processing network is obtained through training an initial feature processing network using one or more sample images, the training comprises performing, for each sample image, iterative processing on said sample image until a convergence condition is met or a quantity of iteration in a quantity of iterations in the iterative process reaches a threshold number, and each iteration of the iterative processing comprises:
processing a sample feature pair of an immediately previous iteration to obtain a sample feature pair of said iteration, and
adjusting parameters of a version of the feature processing network of the immediately previous iteration according to a difference between the sample feature pairs of the immediately previous iteration and said iteration to obtain a version of the feature processing network of said iteration,
wherein the sample feature pair of each iteration comprises a respective feature of the sample image and a respective feature of a sample key point of the first object in said sample image, and
wherein for an earliest iteration of the iterative processing, the initial feature processing network serves as the version of the feature processing network of the immediately previous iteration, and an initial image feature extracted from said sample image and an initial feature of the sample key point serve as the sample feature pair of the immediately previous iteration; and
a determining unit, configured for determining the position of the key point in the first image using the final key-point feature.

10. An apparatus for preprocessing a network for image recognition, arranged in an electronic device, wherein the apparatus comprises:
an extracting unit, configured for extracting an initial image feature from a sample image and obtaining an initial feature of a sample key point of the first object in said sample image; and
a processing unit, configured for processing, through an (i-1)^{th} version of the feature processing network, the (i-1)^{th} sample feature pair obtained in the (i-1)^{th} iteration to obtain the i^{th} sample feature pair, wherein iterative processing is performed on the initial feature of the sample image and the initial feature of the sample key point, i is an integer ranging from 1 through a quantity of iterations in the iterative processing, iterations of the iterative processing comprises an i^{th} iteration and an (i-1)^{th} iteration immediately previous to the i^{th} iteration, and the initial image feature and the initial feature of the sample key point serve as the zero-th sample feature pair,
a first determining unit, configured for determining a feature distance between the (i-1)^{th} sample feature pair and the i^{th} sample feature pair according to a difference between the (i-1)^{th} sample feature pair and the i^{th} sample feature pair;
a calculating unit, configured for calculating a weighted sum of all feature distances obtained from the first iteration through the i^{th} iteration to obtain an i^{th} feature loss;
an adjusting unit, configured for adjusting the parameters of the (i-1)^{th} version of the feature processing network to obtain an i^{th} version of the feature processing network for the (i+1)^{th} iteration, when the i^{th} feature loss does not reach the convergence condition and i is smaller than a threshold number; and
a second determining unit, configured for terminating the iterative processing, when the i^{th} feature loss reaches the convergence threshold or i is equal to the threshold number.

11. A computer-readable storage medium, storing a computer program, wherein the computer program, when executed by a processor, implements the method according to any one of claims 1 to 8.

12. A computer program product, comprising a computer program, wherein the computer program, when executed by a processor, implements the method according to any one of claims 1 to 8.

13. An electronic device, comprising a memory and a processor, wherein the memory stores a computer program, and the processor is configured to execute the computer program to implement the method according to any one of claims 1 to 8.
